(19) Europäisches Patentamt / European Patent Office / Office européen des brevets

(11) **EP 4 187 635 A1**

(12) **EUROPEAN PATENT APPLICATION**

(43) Date of publication:
**31.05.2023 Bulletin 2023/22**

(21) Application number: **22209747.9**

(22) Date of filing: **25.11.2022**

(51) International Patent Classification (IPC):
$H01M\ 4/04$ (2006.01)   $H01M\ 4/1393$ (2010.01)
$H01M\ 4/1395$ (2010.01)   $H01M\ 4/36$ (2006.01)
$H01M\ 4/38$ (2006.01)   $H01M\ 4/48$ (2010.01)
$H01M\ 4/587$ (2010.01)   $H01M\ 4/62$ (2006.01)

(52) Cooperative Patent Classification (CPC):
**H01M 4/0471; H01M 4/1393; H01M 4/1395;
H01M 4/366; H01M 4/386; H01M 4/483;
H01M 4/587; H01M 4/621; H01M 4/623;
H01M 4/625**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.11.2021 KR 20210166116**

(71) Applicant: **Samsung SDI Co., Ltd.
Yongin-si, Gyeonggi-do 17084 (KR)**

(72) Inventors:
• **SON, Inhyuk
17084 Yongin-si (KR)**
• **MAH, Sangkook
17084 Yongin-si (KR)**
• **KAPYLOU, Andrei
17084 Yongin-si (KR)**
• **KIM, Guesung
17084 Yongin-si (KR)**
• **SHIM, Kyueun
17084 Yongin-si (KR)**
• **JO, Sungnim
17084 Yongin-si (KR)**

(74) Representative: **Marks & Clerk LLP
15 Fetter Lane
London EC4A 1BW (GB)**

(54) **COMPOSITE CATHODE ACTIVE MATERIAL, CATHODE AND LITHIUM SECONDARY BATTERY COMPRISING THE COMPOSITE CATHODE ACTIVE MATERIAL, AND METHOD OF PREPARING CATHODE ACTIVE MATERIAL**

(57) Provided are a composite cathode material, a cathode and a lithium battery that include the composite cathode active material, and a method of preparing the composite cathode active material, the composite cathode active material including: a core including a lithium transition metal oxide; and a shell arranged along a surface of the core, wherein the shell includes at least one first metal oxide represented by $M_aO_b$ (where $0<a\leq3$, $0<b<4$, and when a is 1, 2, or 3, and b is not an integer); a first carbon-based material; and a second carbon-based material, and the at least one first metal oxide is arranged in a matrix of the first carbon-based material matrix, M is at least one metal selected from a Groups 2 to 13, 15, and 16 of the Periodic Table of Elements, and the second carbon-based material includes fibrous carbon having an aspect ratio of greater than or equal to 10.

FIG. 1

Processed by Luminess, 75001 PARIS (FR)

**EP 4 187 635 A1**

**Description**

BACKGROUND

1. Field

One or more embodiments relate to a composite cathode active material, a cathode and a lithium battery that include the composite cathode active material, and a method of preparing the composite cathode active material.

2. Description of the Related Art

For miniaturization and high performance of various devices, high energy density of lithium batteries is becoming more important in addition to small-size and light-weight characteristics. In other words, high-capacity lithium batteries are becoming important.

To implement lithium batteries suitable for the use above, cathode active materials having high capacity are being considered.

Cathode active materials of the related art have degraded lifespan characteristics and poor thermal stability due to side reactions.

Therefore, there is a need for a method capable of preventing deterioration of battery performance while including a cathode active material.

SUMMARY

One or more embodiments include a novel composite cathode active material capable of inhibiting a side reaction of the composite cathode active material and improving reversibility of an electrode reaction, so as to prevent deterioration of performance of a lithium battery.

One or more embodiments include a cathode including the composite cathode active material.

One or more embodiments include a method of providing a lithium battery including the cathode.

One or more embodiments include a method of preparing the composite cathode active material.

Additional aspects will be set forth in part in the description which follows and, in part, will be apparent from the description, or may be learned by practice of the presented embodiments of the disclosure.

According to one or more embodiments, provided is a composite cathode active material including:

a core including a lithium transition metal oxide; and
a shell arranged on and conformed to a surface of the core,
wherein the shell includes: at least one first metal oxide represented by $M_aO_b$ (where $0<a\leq3$, $0<b<4$, and when a is 1, 2, or 3, b is not an integer); a first carbon-based material; and a second carbon-based material,
the at least one first metal oxide is arranged in a matrix of the first carbon-based material, and M is at least one metal selected from Groups 2 to 13, 15, and 16 of the Periodic Table of Elements, and
the second carbon-based material includes fibrous carbon having an aspect ratio of greater than or equal to 10.

According to another aspect of one or more embodiments, provided is a cathode including the cathode active material.

According to another aspect of one or more embodiments, provided is a lithium battery including the cathode.

According to another aspect of one or more embodiments, provided is a method of preparing the composite cathode active material, the method including:

providing a lithium transition metal oxide;
providing a composite;
providing a second carbon-based material; and
mechanically milling the lithium transition metal oxide, the composite, and the second carbon-based material,
wherein the composite includes: at least one first metal oxide represented by $M_aO_b$ (where $0<a\leq3$, $0<b<4$, and when a is 1, 2, or 3, b is not an integer); and the first carbon-based material,
the at least one first metal oxide is arranged in a matrix of the first carbon-based material, and M is at least one metal selected from Groups 2 to 13, 15, and 16 of the Periodic Table of Elements, and
the second carbon-based material includes fibrous carbon having an aspect ratio of greater than or equal to 10.

At least some of the above and other features of the invention are set out in the claims.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a schematic cross-sectional view of a composite cathode active material according to an embodiment;
FIG. 2 is a scanning electron microscopic image of a surface of a composite cathode active material used in Example 1;
FIG. 3 shows an X-ray photoelectron spectroscopic (XPS) image for bare NCA91 prepared in Comparative Example 1, a composite prepared in Preparation Example 1, and a composite cathode active material prepared in Example 1;
FIG. 4 shows a Raman spectrum image for a composite prepared in Preparation Example 1 and a composite cathode active material prepared in Example 1;
FIG. 5 is a schematic view of a lithium battery according to an embodiment;
FIG. 6 is a schematic view of a lithium battery according to an embodiment; and
FIG. 7 is a schematic view of a lithium battery according to an embodiment.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

As the present inventive concept allows for various changes and numerous embodiments, particular embodiments will be illustrated in the drawings and described in detail in the written description. However, this is not intended to limit the present inventive concept to particular modes of practice, and it is to be appreciated that all changes, equivalents, and substitutes that do not depart from the technical scope of the present inventive concept are encompassed in the present inventive concept.

The terms used in the present specification are merely used to describe particular embodiments, and are not intended to limit the present inventive concept. An expression used in the singular encompasses the expression of the plural, unless it has a clearly different meaning in the context. In the present specification, it is to be understood that the terms such as "including", "having," or the like, are intended to indicate the existence of the features, numbers, steps, actions, components, parts, ingredients, materials, or combinations thereof disclosed in the specification, and are not intended to preclude the possibility that one or more other features, numbers, steps, actions, components, parts, ingredients, materials, or combinations thereof may exist or may be added. As used herein, "/" may be construed, depending on the context, as referring to "and" or "or".

In the drawings, the thicknesses of layers and regions are exaggerated or reduced for clarity. Like reference numerals in the drawings and specification denote like elements. In the present specification, it will be understood that when an element, e.g., a layer, a film, a region, or a substrate, is referred to as being "on" or "above" another element, it can be directly on the other element or intervening layers may also be present. While such terms as "first", "second", or the like, may be used to describe various components, such components must not be limited to the above terms. The above terms are used only to distinguish one component from another.

The term "particle diameter" as used herein refers to an average diameter of particles when the particles are spherical, and refers to an average major axis length of particles when the particles are non-spherical. The particle diameter of the particles may be measured using a particle size analyzer (PSA). The "particle diameter" of the particles may be an average particle diameter. The average particle diameter may be, for example, a median particle diameter (D50). The medium particle diameter D50 refers to, in a cumulative distribution curve of particles sizes where particles accumulate in the order of particle size from the smallest to the largest, the size of particles corresponding to a cumulative value of 50 % calculated from particles having the smallest particle size. The cumulative value may be, for example, a cumulative volume. The median particle diameter D50 may be, for example, measured by laser diffraction.

Hereinafter, according to example embodiments, a composite cathode active material, a cathode and a lithium battery that include the composite cathode active material, and a method of preparing the composite cathode active material will be further described in detail.

An aspect provides a composite cathode active material including: a core including a lithium transition metal oxide; and a shell arranged on and conformed to a surface of the core, wherein the shell includes: at least one first metal

oxide represented by $M_aO_b$ (where $0<a\leq3$, $0<b<4$, and when a is 1, 2, or 3, b is not an integer); a first carbon-based material; and a second carbon-based material, and the at least one first metal oxide is arranged in a matrix of the first carbon-based material, M is at least one metal selected from a Groups 2 to 13, 15, and 16 of the Periodic Table of Elements, and the second carbon-based material includes fibrous carbon having an aspect ratio of greater than or equal to 10.

Hereinafter, a theoretical basis for providing an excellent effect of a composite cathode active material according to an embodiment will be described, but the theoretical basis is to help understanding of the present inventive concept and is not intended to limit the present inventive concept in any way.

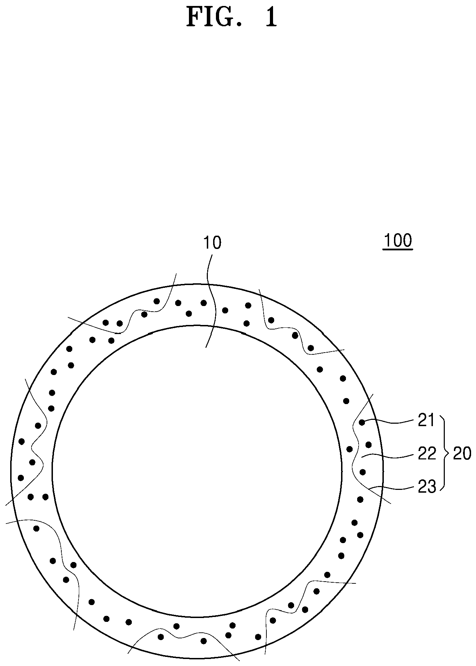

Referring to FIG. 1, a composite cathode active material 100 includes a core 10 and a shell 20 arranged continuously or discontinuously along the surface of the core 10. The shell 20 may coat all or some of the core 10. The core 10 includes a lithium transition metal oxide, and the shell 20 includes a first metal oxide 21, a first carbon-based material 22, and a second carbon-based material 23. The second carbon-based material 23 includes fibrous carbon having an aspect ratio of greater than or equal to 10. In preparation of the composite cathode active material 100, the shell 20 may be arranged on the core 10 of a lithium transition metal oxide using a composite including a plurality of first metal oxides 21 arranged in a matrix of the first carbon-based material 22. Thus, the shell 20 may be uniformly arranged on the core 10 while preventing agglomeration of the first carbon-based material 22. The shell 20 arranged on the core 10 may effectively block a contact between the core 10 and an electrolyte solution. When the shell 20 effectively blocks a contact between the core 10 and the electrolyte solution, a side reaction caused by the contact between the core 10 and an electrolyte solution may be prevented. In addition, when the shell 20 is arranged on the core 10, cation mixing due to the contact between the core 10 and the electrolyte solution may be suppressed. By suppressing cation mixing due to the contact between the core 10 and the electrolyte solution, the generation of a resistance layer inside and/or on the surface of the composite cathode active material 100 may be suppressed. In addition, when the shell 20 is arranged on the core 10, the elution of transition metal ions from the core 10 of the lithium transition metal oxide may be suppressed. The first carbon-based material may be, for example, a crystalline carbon-based material. The first carbon-based material may be, for example, a carbon-based nanostructure. The first carbon-based material may be, for example, a two-dimensional carbon-based nanostructure. The first carbon-based material may be, in an embodiment, graphene. In this case, since a shell including graphene and/or a matrix thereof has flexibility, a change in volume of the composite cathode active material may be easily accepted during charging and discharging of a battery, and occurrence of cracks in the composite cathode active material may be suppressed. Since graphene has high electronic conductivity, interfacial resistance between the composite cathode active material and the electrolyte solution may decrease. Therefore, despite the introduction of a shell including, for example, graphene, internal resistance of a lithium battery may be maintained or reduced. In contrast, the conventional carbon-based materials are easily agglomerated, uniform coating on the core of the lithium transition metal oxide may be difficult.

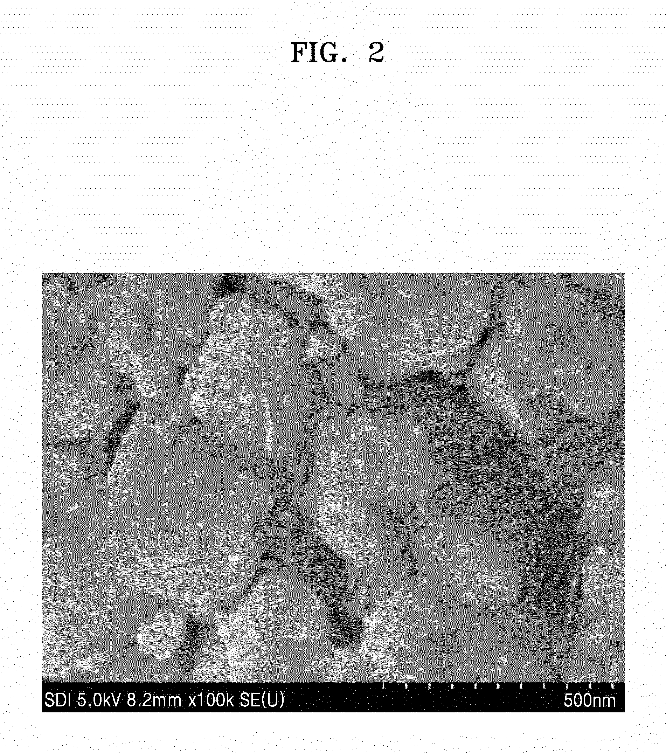

The shell 20 includes a second carbon-based material that is fibrous carbon having an aspect ratio of greater than or equal to 10. Therefore, a conducting path of the composite cathode active material may be further lengthened. The second carbon-based material forms a three-dimensional conductive network among a plurality of composite cathode active materials to reduce internal resistance of a cathode including the composite cathode active material. When the fibrous carbon is fixed on the composite cathode active material, a uniform and stable three-dimensional conductive network may be formed among a plurality of composite cathode active materials. Therefore, by including the second carbon-based material in the composite cathode active material, a lithium battery including the composite cathode active material may have improved high-rate characteristics. In contrast, a simple mixture of the core of the lithium transition metal oxide and fibrous carbon as the second carbon-based material may be, due to agglomeration of fibrous carbon, difficult to form a uniform three-dimensional conductive network among a plurality of lithium transition metal oxide particles. As shown in FIGS. 1 and 2, the second carbon-based material 23 may be arranged on a surface of the composite cathode active material 100. In addition, as shown in FIG. 1, the second carbon-based material 23 may protrude from the surface of the composite cathode active material 100. Therefore, the second carbon-based material 23 may effectively provide a conductive network among the plurality of composite cathode active materials 100. When the second carbon-based material 23 is arranged in a matrix of the first carbon-based material 22, the second carbon-based material may be appropriately coated on the core 10. A matrix of the first carbon-based material 22 may act as a binder for binding the core 10 and the second material 23. Therefore, in the case of the first carbon-based material 22 having no matrix, the second carbon-based material 23 may not be easily attached to the core 10, or the second carbon-based material 23 may be easily detached from the core 10 in a process of preparing slurry for a cathode. When a binder is further added to bind the core 10 of the lithium transition metal and the second carbon-based material 23, the core 10 may be coated by an insulating binder, and accordingly the composite cathode active material 100 may have increased internal resistance. To carbonize the binder, when the core 10 coated with the second carbon-based material 23 and the binder is subjected to heat treatment at a high temperature, the core 10 and the second carbon-based material 23 may be deteriorated during the heat treatment process.

Here, the second carbon-based material has an aspect ratio of greater than or equal to 10, for example, greater than or equal to 20. The aspect ratio of the second carbon-based material may be, for example, in a range of about 10 to about 100,000, about 10 to about 80,000, about 10 to about 50,000, about 10 to about 10,000, about 10 to about 5000, about 10 to about 1000, about 10 to about 500, about 10 to about 100, or about 10 to about 50. The aspect ratio of the second carbon-based material is, for example, a ratio of the length of the major axis passing through the center of the second carbon-based material to the length of the minor axis that is perpendicular to the major axis, wherein the major axis passes through the second carbon-based material and the center of the second carbon-based material, and the minor axis is perpendicular to the major axis and is a diameter of the second carbon-based material.

The diameter of the second carbon-based material may be, for example, less than or equal to about 50 nanometer (nm), less than or equal to about 30 nm, less than or equal to about 20 nm, or less than or equal to 10 nm. The diameter of the second carbon-based material may be, for example, in a range of about 1 nm to about 50 nm, about 1 nm to about 30 nm, or about 1 nm to about 10 nm. When the diameter of the second carbon-based material is excessively large, the absolute number of strands per volume may decrease, and thus the effect of reducing internal resistance may be insignificant. When the diameter of the second carbon-based material is too small, uniform dispersion may be difficult.

The length of the second carbon-based material may be, for example, less than or equal to about 1,000 micrometers ($\mu$m), less than or equal to about 100 $\mu$m, less than or equal to about 50 $\mu$m, less than or equal to about 10 $\mu$m, less than or equal to about 5 $\mu$m, less than or equal to about 2 $\mu$m, less than or equal to about 1 $\mu$m, less than or equal to about 500 nm, or less than or equal to about 300 nm. The length of the second carbon-based material may be, for example, in a range of about 100 nm to about 1,000 $\mu$m, about 100 nm to about 500 $\mu$m, about 100 nm to about 100 $\mu$m, about 100 nm to about 50 $\mu$m, about 100 nm to about 10 $\mu$m, about 100 nm to about 5 $\mu$m, about 100 nm to about 2 $\mu$m, about 100 nm to about 1 $\mu$m, about 100 nm to about 500 nm, or about 100 nm to about 300 nm. The length of the second carbon-based material may be, for example, in a range of about 500 nm to about 1,000 $\mu$m, about 500 nm to about 500 $\mu$m, about 500 nm to about 100 $\mu$m, about 500 nm to about 50 $\mu$m, about 500 nm to about 10 $\mu$m, about 500 nm to about 5 $\mu$m, or about 500 nm to about 2 $\mu$m. As the length of the second carbon-based material increases, the internal resistance of an electrode may decrease. When the length of the second carbon-based material is too short, an effective conductive path may not be provided.

The second carbon-based material may include, for example, carbon nanofiber, carbon nanotube, or a combination thereof.

The carbon nanotube may include, for example, a primary carbon nanotube structure, a secondary carbon nanotube structure formed by agglomeration of multiple particles of the primary carbon nanotube structure, or a combination thereof.

The primary carbon nanotube structure may be one carbon nanotube unit. The carbon nanotube unit may include a graphite sheet in a cylindrical shape with a nano-sized diameter, and may have an sp2 bond structure. According to a bending angle and a structure of the graphite sheet, the characteristics of conductors or the characteristics of semiconductors may be exhibited. The carbon nanotube unit may be classified, depending on the number of bonds consisting a wall, into a single-walled carbon nanotube (SWCNT), a double-walled carbon nanotube (DWCNT), multi-walled carbon nanotube (MWCNT), and the like. As the wall thickness of the carbon nanotube structure unit is small, the resistance may be lowered.

The primary carbon nanotube structure may include, for example, an SWCNT, a DWCNT, an MWCNT, or a combination thereof. The diameter of the primary carbon nanotube structure may be, for example, greater than or equal to about 1 nm or greater than or equal to 2 nm. The diameter of the primary carbon nanotube structure may be, for example, less than or equal to about 20 nm or less than or equal to about 10 nm. The diameter of the primary carbon nanotube structure may be, for example, in a range of about 1 nm to about 20 nm, about 1 nm to about 15 nm, or about 1 nm to about 10 nm. The length of the primary carbon nanotube structure may be, for example, greater than or equal to about 100 nm or greater than or equal to 200 nm. The length of the primary carbon nanotube structure may be, for example, less than or equal to about 1 $\mu$m, less than or equal to about 500 nm, or less than or equal to about 300 nm. The length of the primary carbon nanotube structure may be, for example, in a range of about 100 nm to about 2 $\mu$m, about 100 nm to about 1 $\mu$m, about 100 nm to about 500 nm, about 100 nm to about 400 nm, about 100 nm to about 300 nm, or about 200 nm to about 300 nm. The diameter and length of the primary carbon nanotube structure may be measured from a scanning electron microscope (SEM) image or a transmission electron microscope (TEM) image. In one or more embodiments, the diameter and/or length of the primary carbon nanotube structure may be measured by a laser diffraction method.

The secondary carbon nanotube structure may be a structure formed by assembling the primary carbon nanotube structure to form a bundle type or a rope type, in whole or in part. The secondary carbon nanotube structure may include, for example, a bundle-type carbon nanotube, a rope-type carbon nanotube, or a combination thereof. The diameter of the secondary carbon nanotube structure may be, for example, greater than or equal to 2 nm or greater than or equal to 3 nm. The diameter of the secondary carbon nanotube structure may be, for example, less than or equal to about 50 nm, less than or equal to about 30 nm, less than or equal to about 20 nm, or less than or equal to about 10 nm. The diameter of the secondary carbon nanotube structure may be, for example, in a range of about 2 nm to about 50 nm, about 2 nm to about 30 nm, or about 2 nm to about 20 nm. The length of the secondary carbon nanotube structure may be, for example, greater than or equal to 500 nm, greater than or equal to 700 nm, greater than or equal to about 1 $\mu$m, or greater than or equal to about 10 $\mu$m. The length of the secondary carbon nanotube structure may be, for example, less than or equal to about 1,000 $\mu$m, less than or equal to about 500 $\mu$m, or less than or equal to about 100 $\mu$m. The length of the secondary carbon nanotube structure may be, for example, in a range of about 500 nm to about 1,000 $\mu$m, about 500 nm to about 500 $\mu$m, about 500 nm to about 200 $\mu$m, 500 nm to about 100 $\mu$m, or about 500 nm to about 50 $\mu$m. The diameter and length of the secondary carbon nanotube structure may be measured from an SEM image or an optical microscope image. In one or more embodiments, the diameter and/or length of the secondary carbon nanotube structure may be measured by a laser diffraction method.

The secondary carbon nanotube structure may be used in the preparation of the composite cathode active material by, for example, dispersing in a solvent or the like to be converted into the primary carbon nanotube structure.

The content of the second carbon-based material may be, for example, in a range of about 0.1 wt% to about 50 wt%, about 1 wt% to about 40 wt%, or about 5 wt% to about 30 wt%, based on the total weight of the first carbon-based material and the second carbon-based material. When the composite cathode active material includes the first carbon-based material and the second carbon-based material within the ranges above, a conduction path may be further effectively secured in the composite cathode active material, and thus the internal resistance of the composite cathode active material may be further reduced. Consequently, the cycle characteristics of a lithium battery including the composite cathode active material may be further improved. The content of the second carbon-based material may be, for example, in a range of about 0.001 wt% to about 5 wt%, about 0.01 wt% to about 3 wt%, about 0.01 wt% to about 1 wt%, about 0.01 wt% to about 0.5 wt%, or about 0.01 wt% to about 0.1 wt% of the total weight of the composite cathode active material. When the composite cathode active material includes the second carbon-based material within the ranges above, a conduction path may be secured in the composite cathode active material, and thus the internal resistance of the composite cathode active material may be further reduced. Consequently, the cycle characteristics of a lithium battery including the composite cathode active material may be further improved.

The shell also includes a first metal oxide and a first carbon-based material. Since the first carbon-based material may be derived from, for example, a graphene matrix, the first carbon-based material may have a relatively low density and high porosity, compared to a conventional carbon-based material derived from a graphite-based material. A d002 interplanar distance of the carbon-based material may be, for example, greater than or equal to about 3.38 angstrom (Å), greater than or equal to about 3.40 Å, greater than or equal to about 3.45 Å, greater than or equal to about 3.50 Å, greater than or equal to about 3.60 Å, greater than or equal to about 3.80 Å, or greater than or equal to about 4.00 Å. The d002 interplanar distance of the first carbon-based material included in the shell may be, for example, in a range of about 3.38 Å to about 4.00 Å, about 3.38 Å to about 3.80 Å, about 3.38 Å to about 3.60 Å, about 3.38 Å to about 3.50 Å, or about 3.38 Å to about 3.45 Å. In contrast, the d002 interplanar distance of a conventional carbon-based material derived from a graphite-based material may be, for example, less than or equal to about 3.38 Å or in a range of about 3.35 Å to about 3.38 Å. Since the first metal oxide has voltage resistance, deterioration of the lithium transition metal oxide included in the core may be prevented during charging and discharging at a high voltage. For example, the shell may include one type of the first metal oxide or two or more different types of the first metal oxide. Consequently, high-temperature cycle characteristics of a lithium battery including the above-described composite cathode active material may be improved. The content of the shell may be, for example, in a range of about 0.1 wt% to about 5 wt%, about 0.1 wt% to about 4 wt%, about 0.1 wt% to about 3 wt%, about 0.1 wt% to about 2.5 wt%, about 0.1 wt% to about 2 wt%, or about 0.1 wt% to about 1.5 wt%, based on the total weight of the composite cathode active material. The content of the first metal oxide may be, for example, in a range of about 0.06 wt% to about 3 wt%, about 0.06 wt% to about 2.4 wt%, about 0.06 wt% to about 1.8 wt%, about 0.06 wt% to about 1.5 wt%, about 0.06 wt% to about 1.2 wt%, or about 0.06 wt% to about 0.9 wt%. When the composite cathode active material includes the shell and the first metal oxide within the ranges aboves, respectively, cycle characteristics of a lithium battery may be further improved.

The first metal oxide may include a first metal, and the first metal may be, for example, one or more selected from Al, Nb, Mg, Sc, Ti, Zr, V, W, Mn, Fe, Co, Pd, Cu, Ag, Zn, Sb, and Se. The first metal oxide may be, for example, one or more selected from $Al_2O_z$ (where 0<z<3), $NbO_x$ (where 0<x<2.5), $MgO_x$ (where 0<x<1), $Sc_2O_z$ (where 0<z<3), $TiO_y$ (where 0<y<2), $ZrO_y$ (where 0<y<2), $V_2O_z$ (where 0<z<3), $WO_y$ (where 0<y<2), $MnO_y$ (where 0<y<2), $Fe_2O_z$ (where 0<z<3), $Co_3O_w$ (where 0<w<4), $PdO_x$ (where 0<x<1), $CuO_x$ (where 0<x<1), $AgO_x$ (where 0<x<1), $ZnO_x$ (where 0<x<1), $Sb_2O_z$ (where 0<z<3), and $SeO_y$ (where 0<y<2). By disposing the first metal oxide in a matrix of the first carbon-based material, uniformity of the shell arranged on the core may be improved, and voltage resistance of the composite cathode active material may be further improved. For example, the shell may include $Al_2O_x$ (wherein 0<x<3) as the first metal oxide.

The shell may further include at least one second metal oxide represented by $M_aO_c$ (where 0<a≤3, 0<c≤4, and when a is 1, 2, or 3, c is an integer). M is at least metal selected from Groups 2 to 13 and 15 and 16 of the Periodic Table of Elements. For example, the second metal oxide may include a metal identical to the first metal oxide, and a ratio of a to c, c/a, in the second metal oxide may be greater than a ratio of a to b, b/a, in the first metal oxide. For example, c/a > b/a. The second metal oxide may be selected from $Al_2O_3$, $NbO$, $NbO_2$, $Nb_2O_5$, $MgO$, $Sc_2O_3$, $TiO_2$, $ZrO_2$,

$V_2O_3$, $WO_2$, $MnO_2$, $Fe_2O_3$, $Co_3O_4$, PdO, CuO, AgO, ZnO, $Sb_2O_3$, and $SeO_2$. The first metal oxide may be, for example, a reduction product of the second metal oxide. The first metal oxide may be obtained by reducing some or all of the second metal oxide. Accordingly, the first metal oxide may have a lower oxygen content and a lower metal oxidation number than the second metal oxide. The shell may include, for example, $Al_2O_x$ (where 0<x<3) as the first metal oxide and $Al_2O_3$ as the second metal oxide.

The shell includes the first carbon-based material, and the core includes a lithium transition metal oxide. In addition, the first carbon-based material and a transition metal of the lithium transition metal oxide may be, for example, chemically bound through a chemical bond. The carbon atom (C) of the first carbon-based material and the transition metal (Me) of the lithium transition metal oxide may be, for example, chemically bound through an oxygen atom-mediated C-O-Me bond (e.g., C-O-Ni bond or C-O-Co bond). The first carbon-based material arranged in the shell and the lithium transition metal oxide arranged in the core may be chemically bound through a chemical bond so that the core and the shell may form a composite. Accordingly, the composite cathode active material may be distinguished from a simple physical mixture of the first carbon-based material and the lithium transition metal oxide. In addition, the first metal oxide and the first carbon-based material may be also chemically bound through a chemical bond. Here, the chemical bond may be, for example, a covalent bond or an ionic bond.

The shell may include, for example, one or more selected from the first metal oxide and the second metal oxide, and the one or more selected from the first metal oxide and the second metal oxide may have a particle diameter, for example, in a range of about 1 nm to about 100 nm, about 1 nm to about 50 nm, about 1 nm to about 30 nm, about 5 nm to about 30 nm, or about 10 nm to about 30 nm. When the first metal oxide and/or the second metal oxide has such a nano-scale particle diameter, the first metal oxide and/or the second metal oxide may be further uniformly distributed in a matrix of the first carbon-based material. When the particle diameter of the one or more of the first metal oxide and the second metal oxide is excessively increased, the thickness of the shell may be increased and the internal resistance of the composite cathode active material may increase. When the particle diameter of the one or more of the first metal oxide and the second metal oxide is excessively reduced, the first metal oxide and/or the second metal oxide may not be uniformly dispersed.

The shell includes the first metal oxide and the first carbon-based material, and may further include the second metal oxide. The first carbon-based material may be arranged in a direction protruding from the surface of the first metal oxide and/or the second metal oxide. The first carbon-based material may be arranged in a direction protruding from the surface of the first metal oxide and/or the second metal oxide by growing directly from the surface of the first metal oxide and/or the second metal oxide. The first carbon-based material arranged in a direction protruding from the surface of the first metal oxide and/or the second metal oxide may be, for example, a carbon-based two-dimensional nanostructure, a carbon-based flakes, or graphene.

The thickness of the shell may be, for example, in a range of about 1 nm to about 5 $\mu$m, about 1 nm to about 1 $\mu$m, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, or about 1 nm to about 20 nm. When the thickness of the shell is within the ranges above, a cathode including the composite cathode active material may have further improved electronic conductivity.

The composite cathode active material may further include, for example, a third metal doped on the core and/or a third metal oxide coated on the core. In addition, the shell may be arranged on the third metal doped on the core and/or the third metal oxide coated on the core. For example, after the third metal is doped on the surface of the core of the lithium transition metal oxide or the third metal oxide is coated on the surface of the lithium transition metal oxide, the shell may be arranged on the third metal and/or the third metal oxide. For example, the composite cathode active material may include: a core; an interlayer arranged on the core; and a shell arranged on the interlayer, wherein the interlayer may include a third metal or a third metal oxide. The third metal may be one or more metals selected from Al, Zr, W, and Co, and the third metal oxide may be $Al_2O_3$, $Li_2O$-$ZrO_2$, $WO_2$, CoO, $Co_2O_3$, $Co_3O_4$, or a combination thereof.

The shell conformed to the surface of the core may include, for example, one or more selected from the composite including the first metal oxide and the first carbon-based material, such as graphene, and the second carbon-based material, and a milling product of the composite. The first metal oxide may be arranged in a matrix of the carbon-based material, for example, a graphene matrix. The shell may be, for example, prepared using the composite including the first metal oxide and the first carbon-based material, such as graphene. The composite may further include a second metal oxide, in addition to the first metal oxide. The first composite may include, for example, two or more types of the first metal oxide. The first composite may include, for example, two or more types of the first metal oxide and two or more types of the second metal oxides.

The content of one or more of the composite and the milling product thereof may be, for example, less than or equal to about 5 wt%, less than or equal to about 3 wt%, less than or equal to about 2 wt%, less than or equal to about 2.5 wt% or less, or less than or equal to about 1.5 wt%, based on the total weight of the composite cathode active material. The content of at least one of the composite and the milling product thereof may be in a range of about 0.01 wt% to about 5 wt%, about 0.01 wt% to about 4 wt%, about 0.01 wt% to about 3 wt%, about 0.01 wt% to about 2.5 wt%, about 0.01 wt% to about 2 wt%, about 0.01 wt% to about 1.5 wt%, based on the total weight of the composite cathode active material. When the composite cathode active material includes one or more of the composite and the milling product thereof in the content within the ranges above, cycle characteristics of a lithium battery including the composite cathode active material may be further improved.

The composite may include at least one selected from the first metal oxide and the second metal oxide. The particle diameter of the one or more selected from the first metal oxide and the second metal oxide may be in a range of about 1 nm to about 100 nm, about 1 nm to about 50 nm, about 1 nm to about 30 nm, about 5 nm to about 30 nm, or about 10 nm to about 30 nm. Since the first metal oxide and/or the second metal oxide may have a particle size in the nano range, it may be more uniformly distributed in a matrix of the first carbon-based material of the composite. Accordingly, such a composite may be uniformly coated on the core without agglomeration to form a shell. In addition, the first metal oxide and/or the second metal oxide may be further uniformly arranged on the core by having the particle diameter within the ranges above. Therefore, by uniformly arranging the first metal oxide and/or the second metal oxide on the core, high voltage resistance may be more effectively exhibited. The particle diameter of the first metal oxide and/or the second metal oxide may be measured by, for example, a measurement apparatus using a laser diffraction method or a dynamic light scattering method. The particle diameter may be measured using, for example, a laser scattering particle size distribution meter (e.g., LA-920 of Horiba Ltd.), and is a value of the median particle diameter (D50) when the metal oxide particles are accumulated to 50% from small particles in volume conversion. The uniformity deviation of at least one selected from the first metal oxide and/or the second metal oxide may be less than or equal to about 3%, less than or equal to about 2%, or less than or equal to about 1%. The uniformity may be obtained by, for example, XPS. Accordingly, at least one selected from the first metal oxide and the second metal oxide may have a deviation of less than or equal to about 3%, less than or equal to about 2%, or less than or equal to about 1%, and may be uniformly distributed in the composite.

The composite includes the first carbon-based material. The first carbon-based material may have, for example, a branched structure, and at least one selected from the first metal oxide and the second metal oxide may be distributed in the branched structure of the first metal-based material. The branched structure of the first carbon-based material may include, for example, a plurality of first carbon-based material particles contacting each other. Since the first carbon-based material may have a branched structure, various conducting paths may be provided. The first carbon-based material may be, for example, graphene. Graphene may, for example, have a branched structure, and at least one metal oxide selected from the first metal oxide and the second metal oxide may be distributed in the branched structure of graphene. The branched structure of graphene may include, for example, a plurality of graphene particles contacting each other. Since graphene may have the branched structure, various conducting paths may be provided.

The first carbon-based material may have, for example, a spherical structure, and at least one metal oxide selected from the first metal oxide and the second metal oxide may be distributed in the spherical structure. The spherical structure of the first carbon-based material may have a size in a range of about 50 nm to about 300 nm. A plurality of the first carbon-based material having a spherical structure may be provided. Since the first carbon-based material may have a spherical structure, the composite may have a rigid structure. The first carbon-based material may be, for example, graphene. Graphene may have, for example, a spherical structure, and at least one metal oxide selected from the first metal oxide and the second metal oxide may be distributed in the spherical structure. The spherical structure of graphene may have a size in a range of about 50 nm to about 300 nm. A plurality of graphenes having a spherical structure may be provided. Since graphene may have a spherical structure, the composite may have a rigid structure.

The first carbon-based material may have, for example, a spiral structure in which a plurality of spherical structures are connected to each other, and at least one metal oxide selected from the first metal oxide and the second metal oxide may be distributed in the spherical structure of the spiral structure. The spiral structure of the first carbon-based material may have a size in a range of about 500 nm to about 100 $\mu$m. Since the first carbon-based material may have a spiral structure, the composite may have a rigid structure. The first carbon-based material may be, for example, graphene. Graphene may have, for example, a spiral structure in which a plurality of spherical structures are connected, and at least one metal oxide selected from the first metal oxide and the second metal oxide may be distributed in the spherical structure of the spiral structure. The spiral structure of graphene may have a size in a range of about 500 nm to about 100 $\mu$m. Since graphene may have a spiral structure, the composite may have a rigid structure.

The first carbon-based material may have, for example, a cluster structure in which a plurality of spherical structures are aggregated with each other, and at least one metal oxide selected from the first metal oxide and the second metal oxide may be distributed in the spherical structure of the cluster structure. The cluster structure of the first carbon-based material may have a size in a range of about 0.5 mm to about 10 cm. Since the first carbon-based material may have a cluster structure, the composite may have a rigid structure. The first carbon-based material may be, for example, graphene. Graphene may have, for example, a cluster structure in which a plurality of spherical structures are aggregated, and at least one metal oxide selected from the first metal oxide and the second metal oxide may be distributed in the spherical structure of the cluster structure. The size of the cluster structure of the graphene may be in a range of about 0.5 mm to about 10 cm. The graphene may have a cluster structure, and thus, the first composite may have a robust structure.

The first composite, for example, may be a crumpled faceted-ball structure, and at least one selected from the first metal oxide and the second metal oxide may be distributed inside or on a surface of the crumpled faceted-ball structure. As the first composite may be such a faceted-ball structure, the first composite may be easily coated on irregular surface irregularities of the core.

The first composite, for example, may be a planar structure, and at least one selected from the first metal oxide and the second metal oxide may be distributed inside or on a surface of the planar structure. As the first composite is such a two-dimensional planar structure, the first composite may be easily coated on irregular surface irregularities of the core.

The first carbon-based material may extend from the first metal oxide by a distance of less than or equal to about 10 nm, and may include at least 1 to 20 carbon-based material layers. For example, when a plurality of first carbon-based material layers are laminated, a first carbon-based material having a total thickness of less than or equal to about 12 nm may be arranged on the first metal oxide. For example, the total thickness of the first carbon-based material may be in a range of about 0.6 nm to about 12 nm. The first carbon-based material may be, for example, graphene. Graphene may extend from the first metal oxide by a distance of less than or equal to about 10 nm, and may include at least 1 to 20 graphene layers. For example, when a plurality of graphene layers are laminated, graphene having a total thickness of less than or equal to about 12 nm may be arranged on the first metal oxide. For example, the total thickness of graphene may be in a range of about 0.6 nm to about 12 nm.

The composite cathode active material includes a core, and the core may include, for example, a lithium transition metal oxide represented by one of Formulae 1 to 8:

$$\text{Formula 1} \qquad Li_aNi_xCo_yM_zO_{2-b}A_b$$

wherein, in Formula 1,

$1.0 \leq a \leq 1.2$, $0 \leq b \leq 0.2$, $0.8 \leq x < 1$, $0 < y \leq 0.2$, $0 < z \leq 0.2$, and $x+y+z=1$, and

M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A is F, S, Cl, Br, or a combination thereof,

$$\text{Formula 2} \qquad LiNi_xCo_yMn_zO_2$$

$$\text{Formula 3} \qquad LiNi_xCo_yAl_zO_2$$

wherein, in Formulae 2 and 3, $0.8 \leq x \leq 0.95$, $0 \leq y \leq 0.2$, $0 < z \leq 0.2$, and $x+y+z=1$,

$$\text{Formula 4} \qquad LiNi_xCo_yMn_zAl_wO_2$$

wherein, in Formula 4, $0.8 \leq x \leq 0.95$, $0 \leq y \leq 0.2$, $0 < z \leq 0.2$, $0 < w \leq 0.2$, and $x+y+z+w=1$,

the lithium transition metal oxides of Formulae 1 to 4 may include nickel in the content of greater than or equal to about 80 mol%, greater than or equal to about 85 mol%, greater than or equal to about 90 mol%, or greater than or equal to about 92 mol%, with respect to the total moles of transition metals (e.g. metals excluding lithium) in the lithium transition metal oxides of Formulae 1 to 4, and may provide excellent initial capacity and lifespan characteristics at room temperature and at high temperature, for example, the nickel content in the lithium transition metal oxides of Formulae 1 to 4 may be in a range of about 80 mol% to about 99 mol%, about 85 mol% to about 99 mol%, or about 90 mol% to about 97 mol% with respect to the total moles of transition metals,

$$\text{Formula 5} \qquad Li_aCO_xM_yO_{2-b}A_b$$

wherein, in Formula 5,
$1.0 \leq a \leq 1.2$, $0 \leq b \leq 0.2$, $0.9 \leq x \leq 1$, $0 \leq y \leq 0.1$, and $x+y=1$,
M is Mn, Nb, V, Mg, Ga, Si, W, Mo, Fe, Cr, Cu, Zn, Ti, Al, B, or a combination thereof, and A is F, S, Cl, Br, or a

combination thereof.

Formula 6 $\quad$ $Li_aNi_xMn_yM'_zO_{2-b}A_b$

wherein, in Formula 6,

$1.0 \leq a \leq 1.2$, $0 \leq b \leq 0.2$, $0 < x \leq 0.3$, $0.5 \leq y < 1$, $0 < z \leq 0.3$, and $x+y+z=1$,

M' is Co, Nb, V, Mg, Ga, Si, W, Mo, Fe, Cr, Cu, Zn, Ti, Al, B, or a combination thereof, and A is F, S, Cl, Br, or a combination thereof.

Formula 7 $\quad$ $Li_aM1_xM2_yPO_{4-b}X_b$

wherein, in Formula 7, $0.90 \leq a \leq 1.1$, $0 \leq x \leq 0.9$, $0 \leq y \leq 0.5$, $0.9 < x+y < 1.1$, and $0 \leq b \leq 2$,

M1 is chromium (Cr), manganese (Mn), iron (Fe), cobalt (Co), nickel (Ni), copper (Cu), zirconium (Zr), or a combination thereof,

M2 is Mg, Ca, Sr, Ba, Ti, Zn, B, Nb, Ga, In, Mo, W, Al, Si, Cr, V, Sc, Y, or a combination thereof, and X is O, F, S, P, or a combination thereof.

Formula 8 $\quad$ $Li_aM3_zPO_4$

wherein, in Formula 8, $0.90 \leq a \leq 1.1$, $0.9 \leq z \leq 1.1$, and

M3 is Cr, Mn, Fe, Co, Ni, Cu, Zr, or a combination thereof.

A cathode according to another embodiment includes the composite cathode active material. By including the composite cathode active material, a cathode may provide improved energy density, improved cycle characteristics, and increased conductivity.

When the shell of the composite cathode active material includes the second carbon-based material, the composite cathode active material may additionally act as a conductor. Accordingly, the content of the conductor used in the cathode may be reduced. The conductor is necessary to improve the conductivity of a battery. However, when the content of the conductor is increased, mixture density of the cathode may decrease, and consequently, energy density of a lithium battery may decrease. In contrast, since the cathode disclosed herein uses the above-described composite cathode active material, the content of the conductor may be reduced without an increase in the internal resistance. Therefore, the mixture density of the cathode may increase, and consequently, the energy density of a lithium battery may be improved. In particular, by increasing the content of the composite cathode active material while decreasing the content of the conductor in a high-capacity lithium battery, the energy density of a lithium battery may significantly increase.

The cathode may be, for example, prepared by a wet method. The cathode may be, for example, prepared according to the following method, but the preparation method thereof is not necessarily limited to the exemplified method and may be adjusted to required conditions.

First, a cathode active material composition is prepared by mixing the above-described composite cathode active material, a conductor, a binder, and a solvent. The prepared cathode active material composition may be directly coated and dried on an aluminium current collector to form a cathode plate provided with a cathode active material layer. In one or more embodiments, a film obtained by casting the cathode active material composition on a separate support, which then may be separated from the support and laminated on an aluminium current collector to prepare a cathode plate on which the cathode active material layer is formed.

Examples of the conductor may be: carbon black, graphite particulates, natural graphite, artificial graphite, acetylene black, Ketjen black, carbon fibers; carbon nanotubes; metallic powder, metallic fiber, or metallic tube of copper, nickel, aluminium, silver, and the like; and a conductive polymer such as a polyphenylene derivative. However, embodiments are not limited thereto, and any suitable conductor available in the art may be used. In one or more embodiments, the cathode may not include, for example, a separate conductor.

Examples of the binder may be a vinylidene fluoride/hexafluoropropylene copolymer, polyvinylidene fluoride, polyacrylonitrile, polymethyl methacrylate, polytetrafluoroethylene (PTFE), a mixture of the above-described polymers, a styrene butadiene-rubber polymer, and the like may be used. As a solvent, N-methyl pyrrolidone (NMP), acetone, water, and the like may be used. However, embodiments are not limited thereto, and any suitable binder and solvent available in the art may be used.

By further adding a plasticizer or a pore former to the cathode active material composition, pores may be formed inside an electrode plate.

The contents of the composite cathode active material, conductor, binder, and solvent used in the cathode may be at levels suitable for use in lithium batteries. Depending on the use and configuration of the lithium battery, one or more of the conductor, the binder, and the solvent may be omitted.

The content of the binder used in the cathode may be in a range of about 0.1 wt% to about 10 wt% or about 0.1 wt% to about 5 wt%, with respect to the total weight of the cathode active material layer. The content of the composite cathode active material used in the cathode may be in a range of about 80 wt% to about 99 wt%, about 90 wt% to about 99 wt%, or about 95 wt% to about 99 wt%, with respect to the total weight of the cathode active material layer. The content of the conductor used in the cathode may be in a range of about 0.01 wt% to about 10 wt%, about 0.01 wt% to about 5 wt%, about 0.01 wt% to about 3 wt%, about 0.01 wt% to about 1 wt%, about 0.01 wt% to about 0.5 wt%, or about 0.01 wt% to about 0.1 wt%, with respect to the total weight of the cathode active material layer. The conductor may be omitted.

In addition, the cathode may additionally include a general cathode active material other than the above-described composite cathode active material.

As the general cathode active material, any suitable lithium-containing metal oxide may be used without limitation. For example, at least one selected from composite oxides of lithium and a metal selected from Co, Mn, Ni, and a combination thereof may be used, and a specific example thereof may be a compound represented by one of the following formulae: $Li_aA_{1-b}B'_bD_2$ (where $0.90 \leq a \leq 1$ and $0 \leq b \leq 0.5$); $Li_aE_{1-b}B'_bO_{2-c}D_c$ (where $0.90 \leq a \leq 1$, $0 \leq b \leq 0.5$, and $0 \leq c \leq 0.05$); $LiE_{2-b}B'_bO_{4-c}D_c$ (where $0 \leq b \leq 0.5$ and $0 \leq c \leq 0.05$); $Li_aNi_{1-b-c}CO_bB'_cD_\alpha$ (where $0.90 \leq a \leq 1$, $0 \leq b \leq 0.5$, $0 \leq c \leq 0.05$, and $0 < \alpha \leq 2$); $Li_aNi_{1-b-c}CO_bB'_cO_{2-\alpha}F'_\alpha$ (where $0.90 \leq a \leq 1$, $0 \leq b \leq 0.5$, $0 \leq c \leq 0.05$, $0 < \alpha < 2$); $Li_aNi_{1-b-c}CO_bB'_cO_{2-\alpha}F'_2$ (where $0.90 \leq a \leq 1$, $0 \leq b \leq 0.5$, $0 \leq c \leq 0.05$, $0 < \alpha < 2$); $Li_aNi_{1-b-c}Mn_bB'_cD_\alpha$ (where $0.90 \leq a \leq 1$, $0 \leq b \leq 0.5$, $0 \leq c \leq 0.05$, $0 < \alpha < 2$); $Li_aNi_{1-b-c}Mn_bB'_cO_{2-\alpha}F'_\alpha$ (where $0.90 \leq a \leq 1$, $0 \leq b \leq 0.5$, $0 \leq c \leq 0.05$, $0 < \alpha < 2$); $Li_aNi_{1-b-c}Mn_bB'_cO_{2-\alpha}F'_2$ (where $0.90 \leq a \leq 1$, $0 \leq b \leq 0.5$, $0 \leq c \leq 0.05$, $0 < \alpha < 2$); $Li_aNi_bE_cG_dO_2$ (where $0.90 \leq a \leq 1$, $0 \leq b \leq 0.9$, $0 \leq c \leq 0.5$, and $0.001 \leq d \leq 0.1$); $Li_aNi_bCO_cMn_dGe_O_2$ (where $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1$ and $0.001 \leq b \leq 0.1$); $Li_aCoG_bO_2$ (where $0.90 \leq a \leq 1$ and $0.001 \leq b \leq 0.1$); $Li_aMnG_bO_2$ (where $0.90 \leq a \leq 1$ and $0.001 \leq b \leq 0.1$); $Li_aMn_2G_bO_4$ (where $0.90 \leq a \leq 1$ and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (where $0 \leq f \leq 2$); $Li_{(3-f)}Fe_2(PO_4)_3$ ($0 \leq f \leq 2$); and $LiFePO_4$.

In the formulae above representing the above-described compounds, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof. A compound in which a coating layer is provided on the surface of the above-described compound may be used, and a mixture of the above-described compound and the compound provided with the coating layer rmay also be used. The coating layer provided on the surface of the above-described compound may include a coating element compound such as an oxide of a coating element, a hydroxide of a coating element, an oxyhydroxide of a coating element, an oxycarbonate of a coating element, or a hydroxycarbonate of a coating element. The compound constituting this coating layer may be amorphous or crystalline. The coating element included in the coating layer may be Mg, Al, Co, K, Na, Ca, Si, Ti, V, Sn, Ge, Ga, B, As, Zr, or a mixture thereof. The method of forming the coating layer may be selected within a range that does not adversely affect the physical properties of the cathode active material. The coating method is, for example, spray coating, dip coating, and the like. A more detailed description of the coating method will not be provided because it is well understood by those in the art.

In one or more embodiments, the cathode may be a dry cathode prepared in a dry manner.

A dry cathode may include a dry composite cathode active material, a dry conductor, and a dry binder, the dry composite cathode active material including: a core including a lithium transition metal oxide; and a shell conformed to a surface of the core, wherein the shell includes: at least one first metal oxide represented by $M_aO_b$ (where $0 < a \leq 3$, $0 < b < 4$, and when a is 1, 2, or 3, b is not an integer); a first carbon-based material; and a second carbon-based material, the first metal oxide is arranged in a matrix of the first carbon-based material, M is at least one metal selected from Groups 2 to 13, 15, and 16 of the Periodic Table of Elements, and the second carbon-based material is fibrous carbon having an aspect ratio of greater than or equal to 10.

A method of preparing a dry cathode may include: for example, dry-mixing a dry composite cathode active material, a dry conductor, and a dry binder to prepare a dry mixture; providing a cathode current collector; arranging an interlayer on one surface of the cathode current collector; and arranging and rolling the dry mixture on the interlayer to prepare a cathode in which a cathode active material layer is arranged on one surface of the cathode current collector.

First, a dry mixture may be prepared by dry-mixing a composite cathode active material, a dry conductor, and a dry binder. The dry-mixing refers to mixing in a state that does not include a process solvent. The process solvent refers to, for example, a solvent used in the preparation of an electrode slurry. The process solvent referred to may be, for example, water, NMP, and the like, but is not limited thereto. Any process solvent used in the preparation of an electrode slurry may be referred to without limitation. The dry-mixing may be performed, for example, at a temperature in a range of about 25 °C to about 65 °C using a stirrer. The dry-mixing may be performed, for example, at a rotation speed in a range of about 10 rpm to about 10,000 rpm or about 100 rpm to about 10,000 rpm. The dry-mixing may be performed, for example, for about 1 minute to about 200 minutes or about 1 minute to about 150 minutes. The composite anode active material may be a dry composite anode active material.

The dry-mixing may be performed, for example, at least once. First, a first mixture may be prepared by performing first dry-mixing on a composite cathode active material, a dry conductor, and a dry binder. The first dry-mixing may be performed, for example, at a temperature in a range of about 25 °C to about 65 °C, at a rotation speed of less than or equal to about 2,000 rpm, and for 15 minutes or less. The first dry-mixing may be performed, for example, at a temperature in a range of about 25 °C to about 65 °C, at a rotation speed in a range of about 500 rpm to about 2,000 rpm, and for about 5 minutes to about 15 minutes. By the first dry-mixing, the composite cathode active material, the dry conductor, and the dry binder may be uniformedly mixed. Subsequently, a second mixture may be prepared by performing second dry-mixing on a composite cathode active material, a dry conductor, and a dry binder. The second dry-mixing may be performed, for example, at a temperature in a range of about 25 °C to about 65 °C, at a rotation speed of greater than or equal to about 4,000 rpm, and for 10 minutes or more. The second dry-mixing may be performed, for example, at a temperature in a range of about 25 °C to about 65 °C, at a rotation speed in a range of about 4,000 rpm to about 9,000 rpm, and for about 10 minutes to about 60 minutes. By the second dry-mixing, a dry mixture including a fibrillated dry binder may be obtained.

The stirrer may be, for example, a kneader. The stirrer may include: for example, a chamber; at least one rotation axis arranged inside the chamber to rotate; and a blade rotatably coupled to the rotation axis and arranged in a longitudinal direction of the rotation axis. The blade may be, for example, at least one selected from a ribbon blade, a sigma blade, a jet (Z) blade, a dispersion blade, and a screw blade. Since the blade is included, the dry composite cathode active material, the dry conductor, and the dry binder may be effectively mixed without using a solvent to prepare a mixture in a dough-like shape.

The prepared dry mixture may be introduced into an extrusion device and extruded in a sheet form. Here, the pressure at the time of extrusion may be, for example, in a range of about 4 MPa to about 100 MPa or about 10 MPa to about 90 MPa. The extrudate obtained in a sheet form may be a sheet for the cathode active material layer.

Examples of the dry conductor may be: carbon black, graphite particulates, natural graphite, artificial graphite, acetylene black, Ketjen black, carbon fibers; carbon nanotubes; metallic powder, metallic fiber, or metallic tubes of copper, nickel, aluminium, silver, and the like; and a conductive polymer such as a polyphenylene derivative. However, embodiments are not limited thereto, and any suitable binder available in the art may be used. The conductor may be, for example, a carbon-based conductor. The dry conductor may be a conductive material that has not been in contact with a process solvent.

Examples of the dry binder may be a vinylidene fluoride/hexafluoropropylene copolymer, polyvinylidene fluoride, polyacrylonitrile, polymethyl methacrylate, PTFE, a mixture of the above-described polymers, a styrene butadiene-rubber polymer, and the like. However, embodiments are not limited thereto, and any suitable binder and solvent available in the art may be used. The dry binder may be, for example, PTFE. The dry binder may be a binder that has not been in contact with the process solvent.

By further adding a plasticizer or a pore former to the dry mixture, pores may be formed inside the cathode active material layer.

The contents of the dry composite cathode active material, dry conductor, and dry binder used in the dry cathode may be at the same levels as the contents of the composite cathode active material, conductor, and binder used in the wet cathode, respectively.

Next, a cathode current collector may be provided. The cathode current collector may be, for example, an aluminium foil.

Then, an interlayer may be arranged on one surface of the cathode current collector. The interlayer may include a carbon-based conductor and a binder. The interlayer may be omitted.

Next, the prepared sheet for the cathode active material layer may be arranged on the interlayer, and rolled to prepare a cathode in which the cathode active material layer is arranged on one surface of the cathode current collector. The interlayer may be arranged between the cathode current collector and the cathode active material layer. The rolling may include, for example, a roll press, a flat press, or the like, but is not necessarily limited thereto. Here, the pressure at the time of rolling may be, for example, in a range of about 0.1 ton/cm$^2$ to about 10.0 ton/cm$^2$, but is not limited thereto. When the the pressure at the rolling is excessively increased, cracks may occur in the cathode current collector. When the pressure at the rolling is excessively low, the binding force between the cathode current collector and the cathode active material layer may be reduced.

Another aspect provides a lithium battery including a cathode that includes the above-described composite cathode active material.

When the lithium battery includes the cathode including the above-described composite cathode active material, improved energy density, improved cycle characteristics, and improved thermal stability may be provided.

The lithium battery may be, for example, prepared according to the following method, but the preparation method thereof is not necessarily limited to the exemplified method and may be adjusted to required conditions.

First, a cathode may be prepared according to the above-described method of preparing the cathode.

Next, an anode may be manufactured as follows. The anode may be, for example, prepared in the same manner as in the cathode, except that an anode active material is used instead of the composite cathode active material. In addition, in the anode active material composition, the substantially same conductor, binder, and solvent used in the cathode preparation may be used.

For example, an anode active material, a conductor, a binder, and a solvent may be mixed to prepare an anode active material composition. The anode active material composition may be directly coated on a copper current collector to prepare an anode electrode plate. In one or more embodiments, the anode active material composition may be cast on a separate support to form an anode active material film, which may then be separated from the support and laminated on a copper current collector to prepare an anode electrode plate.

As the anode active material, any suitable anode active material available in the art for a lithium battery may be used. For example, the anode active material may include at least one selected from lithium metal, a metal alloyable with lithium, a transition metal oxide, a non-transition metal oxide, and a carbon-based material. Examples of the metal alloyable with lithium may be silicon (Si), tin (Sn), aluminium (Al), germanium (Ge), lead (Pb), bismuth (Bi), antimony (Sb), a Si-Y alloy (where Y is an alkali metal, an alkaline earth metal, a Group 13 element, a Group 14 element, a transition metal, a rare earth element, or a combination thereof, and Y is not Si), and a Sn-Y alloy (wherein Y is an alkali metal, an alkaline earth-metal, a Group 13 element, a Group 14 element, a transition metal, a rare earth element, or a combination thereof, and Y is not Sn). For example, Y may be magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), polonium (Po), or a combination thereof. For example, the transition metal oxide may be a lithium titanium oxide, a vanadium oxide, or a lithium vanadium oxide. The non-transition metal oxide may be, for example, $SnO_2$, SiOx (where 0<x<2), and the like. The carbon-based material may be, for example, crystalline carbon, amorphous carbon, or a mixture thereof. The crystalline carbon may be, for example, shapeless, plate-like, flake-like, spherical, or fibrous graphite, such as natural graphite or artificial graphite. The amorphous carbon may be, for example, soft carbon (carbon sintered at a low temperature) or hard carbon, mesophase pitch carbide, sintered coke, and the like.

The contents of the anode active material, conductor, binder, and solvent may be at levels suitable for use in lithium batteries. At least one of the conductive agent, the binder, and the solvent may be omitted according to the use and the structure of the lithium battery.

The content of the binder used in the anode may be in a range of about 0.1 wt% to about 10 wt% or about 0.1 wt% to about 5 wt%, with respect to the total weight of the anode active material layer. The content of the conductor used in the anode may be in a range of about 0.1 wt% to about 10 wt% or about 0.1 wt% to about 5 wt%, with respect to the total weight of the anode active material layer. The content of the anode active material used in the anode may be in a range of about 80 wt% to about 99 wt%, about 90 wt% to about 99 wt%, or about 95 wt% to about 99 wt%, with respect to the total weight of the anode active material layer. When the anode active material is lithium metal, the anode may not include a binder and a conductor.

Next, a separator to be disposed between the cathode and the anode may be prepared.

The separator may be any suitable separator that is commonly used in lithium batteries. The separator may have, for example, low resistance to migration of ions in an electrolyte and have electrolyte solution-retaining ability. The separator may be, for example, glass fiber, polyester, Teflon, polyethylene, polypropylene, PTFE, and a combination thereof, each of which may be in a non-woven fabric form or a woven fabric form. For a lithium-ion battery, a rollable separator including, for example, polyethylene or polypropylene may be used. A separator with a good organic electrolyte solution-retaining ability may be used for a lithium-ion polymer battery.

The separator may be, for example, prepared according to the following example method, but embodiments are not limited thereto, and the method may be controlled according to the required conditions.

First, a polymer resin, a filler, and a solvent may be mixed together to prepare a separator composition. Then, the separator composition may be directly coated on an electrode, and then dried to form a separator. In one or more embodiments, the separator composition may be cast on a support and then dried to form a separator film, which may then be separated from the support and laminated on an electrode to form a separator.

The polymer used in the preparation of the separator is not particularly limited, and any suitable polymer that is used as a binder for an electrode plate may be used. For example, a vinylidene fluoride/hexafluoropropylene copolymer, PVDF, polyacrylonitrile, polymethylmethacrylate, or a mixture thereof may be used.

Next, an electrolyte may be prepared.

The electrolyte may be, for example, an organic electrolyte solution. The organic electrolyte solution may be, for example, prepared by dissolving a lithium salt in an organic solvent.

The organic solvent may be any suitable organic solvent available in the art. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, $\gamma$-butyrolactone, dioxolan, 4-methyl dioxolan, N,N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

The lithium salt may be any suitable lithium salt available in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where x and y may each be a natural number of 1 to 20), LiCl, LiI, or any mixture thereof.

In one or more embodiments, the electrolyte may be a solid electrolyte. The solid electrolyte may be, for example, boron oxide or lithium oxynitride, but is not limited thereto. The solid electrolyte may be any suitable solid electrolyte available in the art. The solid electrolyte may be formed on the anode by a method, such as sputtering, or a separate solid electrolyte sheet may laminated on the anode.

The solid electrolyte may be, for example, an oxide-based solid electrolyte or a sulfide-based solid electrolyte.

The solid electrolyte may be, for example, an oxide-based solid electrolyte. The oxide-based solid electrolyte may include at least one selected from $Li_{1+x+y}Al_xTi_{2-x}Si_yP_{3-y}O_{12}$ (where 0<x<2 and 0≤y<3), $BaTiO_3$, $Pb(Zr,Ti)O_3$ (PZT), $Pb_{1-x}La_xZr_{1-y}Ti_yO_3$ (PLZT) (where 0≤x<1 and 0≤y<1), $PB(Mg_3Nb_{2/3})O_3\text{-}PbTiO_3$(PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (where 0<x<2 and 0<y<3), $Li_xAl_yTi_z(PO_4)_3$ (where 0<x<2, 0<y<1, and 0<z<3), $Li_{1+x+y}(Al,Ga)_x(Ti,Ge)_{2-x}Si_yP_{3-y}O_{12}$ (where 0≤x≤1 and 0≤y≤1), $Li_xLa_yTiO_3$ (where 0<x<2 and 0<y<3), $Li_2O$, LiOH, $Li_2CO_3$, $LiAlO_2$, $Li_2O\text{-}Al_2O_3\text{-}SiO_2\text{-}P_2O_5\text{-}TiO_2\text{-}GeO_2$, and $Li_{3+x}La_3M_2O_{12}$ (where M may be Te, Nb, or Zr, and x may be an integer from 1 to 10). The solid electrolyte may be prepared by a sintering method or the like. For example, the oxide-based solid electrolyte may include a garnet-type solid electrolyte selected from $Li_7La_3Zr_2O_{12}$ (LLZO) and $Li_{3+x}La_3Zr_{2-a}M_aO_{12}$ (M-doped LLZO) (where M may be Ga, W, Nb, Ta, or Al, and x may be an integer from 1 to 10).

The sulfide-based solid electrolyte may be, for example, lithium sulfide, silicon sulfide, phosphorus sulfide, boron sulfide, or a combination thereof. The sulfide-based solid electrolyte particles may include $Li_2S$, $P_2S_5$, $SiS_2$, $GeS_2$, $B_2S_3$, or a combination thereof. The sulfide-based solid electrolyte particles may be $Li_2S$ or $P_2S_5$. The sulfide-based solid electrolyte particles are known to have higher lithium ion conductivity than other inorganic compounds. For example, the sulfide-based solid electrolyte may include $Li_2S$ and $P_2S_5$. When the sulfide solid electrolyte material constituting the sulfide-based solid electrolyte includes $Li_2S\text{-}P_2S_5$, a mixing molar ratio of $Li_2S$ to $P_2S_5$ may be, for example, in a range of about 50:50 to about 90:10. In addition, an inorganic solid electrolyte prepared by adding $Li_3PO_4$, halogen, a halogen compound, $Li_{2+2x}Zn_{1-x}GeO_4$ ("LISICON") (where 0≤x<1), $Li_{3+y}PO_{4-x}N_x$ ("LIPON") (where 0<x<4 and 0<y<3), $Li_{3.25}Ge_{0.25}P_{0.75}S_4$ ("Thio-LISICON"), $Li_2O\text{-}Al_2O_3\text{-}TiO_2\text{-}P_2O_5$ ("LATP"), or the like to an inorganic solid electrolyte, such as $Li_2S\text{-}P_2S_5$, $SiS_2$, $GeS_2$, $B_2S_3$, or a combination thereof may be used as the sulfide solid electrolyte. Non-limiting examples of the sulfide solid electrolyte material may be: $Li_2S\text{-}P_2S_5$; $Li_2S\text{-}P_2S_5\text{-}LiX$ (where X may be a halogen element); $Li_2S\text{-}P_2S_5\text{-}Li_2O$; $Li_2S\text{-}P_2S_5\text{-}Li_2O\text{-}LiI$; $Li_2S\text{-}SiS_2$; $Li_2S\text{-}SiS_2\text{-}LiI$; $Li_2S\text{-}SiS_2\text{-}LiBr$; $Li_2S\text{-}SiS_2\text{-}LiCl$; $Li_2S\text{-}SiS_2\text{-}B_2S_3\text{-}LiI$; $Li_2S\text{-}SiS_2\text{-}P_2S_5\text{-}LiI$; $Li_2S\text{-}B_2S_3$; $Li_2S\text{-}P_2S_5\text{-}Z_mS_n$ (where 0<m<10, 0<n<10, and Z may be Ge, Zn, or Ga); $Li_2S\text{-}GeS_2$; $Li_2S\text{-}SiS_2\text{-}Li_3PO_4$; and $Li_2S\text{-}SiS_2\text{-}Li_pMO_q$ (where 0<p<10, 0<q<10, and M may be P, Si, Ge, B, Al, Ga, or In). In this regard, the sulfide-based solid electrolyte material may be prepared by treating raw starting materials of the sulfide-based solid electrolyte material (e.g., $Li_2S$, $P_2S_5$, etc.) by a melt quenching method, a mechanical milling method, and the like. Also, a calcination process may be performed after the treatment. The sulfide-based solid electrolyte may be amorphous or crystalline, or may be in a mixed state.

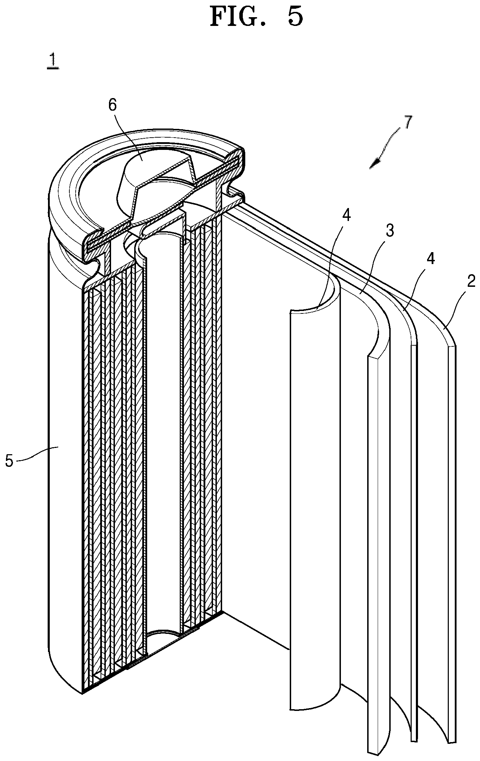

Referring to FIG. 5, a lithium battery 1 according to an embodiment includes a cathode 3, an anode 2, and a separator 4. The cathode 3, the anode 2, and the separator 4 may be wound or folded to form a battery structure 7. The formed battery structure 7 may be accommodated in a battery case 5. Then, the battery case 5 may be filled with an organic electrolyte solution, and then sealed with a cap assembly 6, thereby completing the manufacture of the lithium battery 1. The battery case 5 may be cylindrical, but the shape of the battery case 5 is not necessarily limited thereto. For example, the battery case 5 may be a square-type, a thin-film type, or the like.

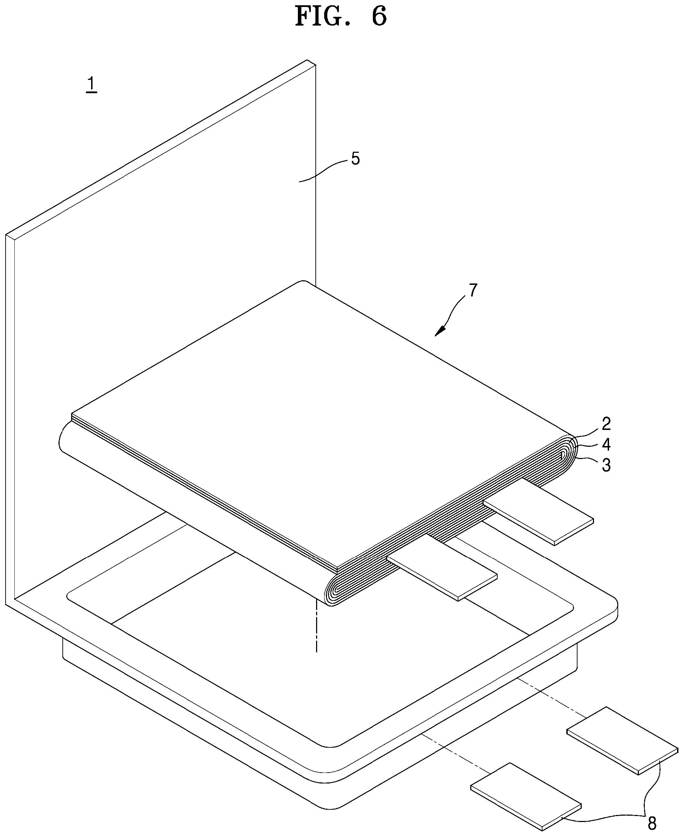

Referring to FIG. 6, the lithium battery 1 according to an embodiment includes the cathode 3, the anode 2, and the separator 4. The separator 4 may be disposed between the cathode 3 and the anode 2, and the cathode 3, the anode 2, and the separator 4 may be wound or folded to form the battery structure 7. The formed battery structure 7 may be accommodated in a battery case 5. The lithium battery 1 may include an electrode tab 8 serving as an electrical path for inducing a current formed in the battery structure 7 to the outside. Then, the battery case 5 may be filled with an organic electrolyte solution, and then sealed, thereby completing the manufacture of the lithium battery 1. The battery case 5 may be a square-type, but the shape of the battery case 5 is not necessarily limited thereto. For example, the battery case 5 may be a cylindrical-type, a thin-film type, or the like.

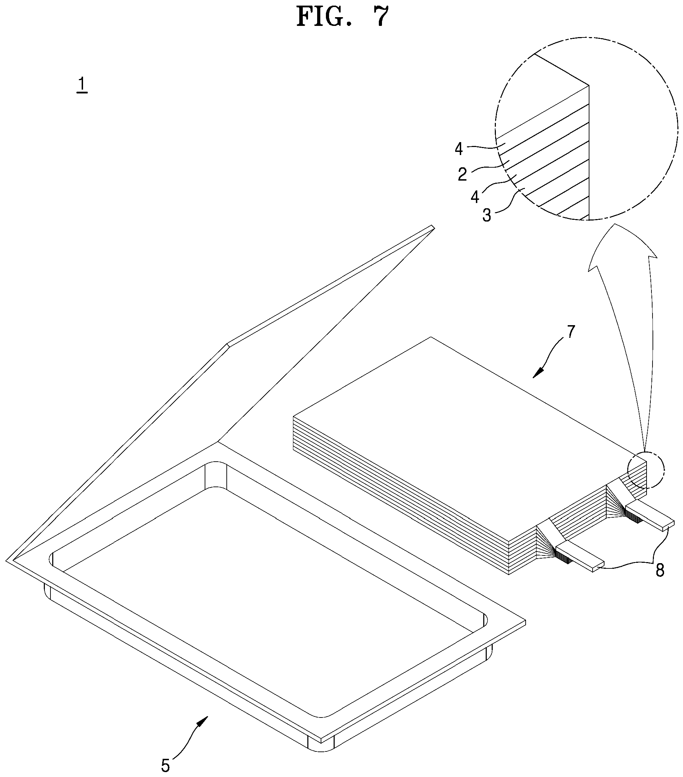

Referring to FIG. 7, the lithium battery 1 according to an embodiment includes the cathode 3, the anode 2, and the separator 4. The separator 4 may be disposed between the cathode 3 and the anode 2 to form a battery structure 7. The battery structure 7 may be stacked in a bi-cell structure, and then accommodated in the battery case 5. The lithium battery 1 may include an electrode tab 8 serving as an electrical path for inducing a current formed in the battery structure 7 to the outside. Then, the battery case 5 may be filled with an organic electrolyte solution, and then sealed, thereby completing the manufacture of the lithium battery 1. The battery case 5 may be a square-type, but the shape of the battery case 5 is not necessarily limited thereto. For example, the battery case 5 may be a cylindrical-type, a thin-film type, or the like.

A pouch-type lithium battery each corresponds to the use of a pouch as a battery case for lithium batteries of FIGS. 5 to 7. The pouch-type lithium battery may include at least one battery assembly. The separator may be disposed between the cathode and the anode to provide a battery assembly. The battery assembly may be laminated as a bi-cell structure, impregnated with an organic electrolyte solution, and accommodated and sealed in a pouch to complete the manufacture of a pouch-type lithium battery. For example, although not shown in the drawings, the above-described cathode, anode, and the separator may be simply stacked and accommodated in a pouch in the form of an electrode assembly, or may be wound or folded into an electrode assembly in the form of a jelly roll to be then accommodated in the pouch. Then, an organic electrolyte solution may be injected into the pouch and sealed to complete the manufacture of a lithium battery.

Since the lithium battery may have excellent lifespan characteristics and excellent high-rate characteristics, the lithium battery may be used in, for example, an electric vehicle (EV). For example, the lithium battery may be used in a hybrid vehicle, such as a plug-in hybrid electric vehicle (PHEV). In addition, the lithium battery may be applicable to the high-power storage field. For example, the lithium battery may be used in an electric bicycle, a power tool, or the like.

A plurality of the lithium batteries may be stacked to form a battery module, and a plurality of the battery modules may form a battery pack. The battery pack may be used in a device that requires large capacity and high power. For example, the battery pack may be used in a laptop computer, a smart phone, or an electric vehicle. The battery module may include, for example, multiple batteries and a frame that holds the multiple batteries. The battery pack may include, for example, a plurality of battery modules and a bus bar connecting the battery modules. The battery module and/or the battery pack may further include a cooling device. A plurality of battery packs may be controlled by a battery management system. The battery management system may include a battery pack and an electronic control apparatus connected to the battery pack.

Another aspect provides a method of preparing a composite cathode active material, the method including: providing a lithium transition metal oxide; providing a composite; providing a second carbon-based material; and mechanically milling the lithium transition metal oxide, the composite, and the second carbon-based material, wherein the composite includes: at least one metal oxide represented by $M_aO_b$ (where $0<a\leq3$, $0<b<4$, and when a is 1, 2, or 3, and b is not an integer); a first carbon-based material and the second carbon-based material, wherein the at least one first metal oxide is arranged in a matrix of the first carbon-based material, and M is at least one metal selected from Groups 2 to 13, 15, and 16 of the Periodic Table of Elements, and the second carbon-based material includes fibrous carbon having an aspect ratio of greater than or equal to 10.

A lithium transition metal oxide is provided. The lithium transition metal oxide may be, for example, the compound represented by Formula 1 to 8.

The composite is provided. The providing of the compoiste may include, for example, providing a reaction gas including a carbon source gas to the structure including the second metal oxide, and performing heat treatment to provide the composite. The providing of the composite may include, for example, supplying reaction gas formed of a carbon source gas to at least one of second metal oxide represented by $M_aO_c$ (where $0<a\leq3$, $0<c\leq4$, and when a is 1, 2, or 3, c is an integer) and performing heat treatment to prepare a composite, wherein M is at least one metal selected from Groups 2 to 13, 15, and 16 of the period table.

The carbon source gas may be a gas consisting of a compound represented by Formula 9, or may be mixed gas including at least one selected from a compound represented by Formula 9, a compound represented by Formula 10, and an oxygen-containing gas represented by Formula 11.

$$\text{Formula 9} \qquad C_nH_{(2n+2-a)}[OH]_a$$

wherein, in Formula 9, n is 1 to 20, and a is 0 or 1;

$$\text{Formula 10} \qquad C_nH_{2n}$$

wherein, in Formula 10, n is 2 to 6;

Formula 11 $\qquad$ $C_xH_yO_z$

wherein, in Formula 11, x is 0 or an integer of 1 to 20, y is 0 or an integer of 1 to 20, and z is 1 or 2.

The compound represented by Formula 9 and the compound represented by Formula 10 may be at least one selected from the group consisting of methane, ethylene, propylene, methanol, ethanol, and propanol. The oxygen-containing gas represented by Formula 11 may include, for example, carbon dioxide ($CO_2$), carbon monoxide (CO), water vapor ($H_2O$), or a mixture thereof.

After the providing of the reaction gas consisting of the carbon raw source gas to the second metal oxide represented by $M_aO_c$ (where $0<a\leq3$, $0<c\leq4$, and when a is 1, 2, or 3, c is an integer) and the performing of the heat treatment, at least one inert gas selected from nitrogen, helium, and argon may be used to further proceed a cooling process. The cooling process refers to adjusting the reaction temperature to room temperature (20 °C to 25 °C). The carbon source gas may include at least one inert gas selected from nitrogen, helium, and argon.

In the preparation method of the composite, a process of growing a carbon-based material, e.g., graphene, may be performed under various conditions depending on a gas reaction.

In the first condition, for example, methane may be provided first to a reactor, in which the second metal oxide represented by $M_aO_c$ (where $0<a\leq3$ and $0<c\leq4$, and when a is 1, 2, or 3, c is an integer) is arranged, and the reaction temperature may be raised to the heat treatment temperature T. The time for raising the temperature to the heat treatment temperature T may be 10 minutes to about 4 hours, and the heat treatment temperature T may be in a range of about 700 °C to about 1,100 °C. The heat treatment may be performed during a reaction time at the heat treatment temperature T. The reaction time may be, for example, 4 hours to 8 hours. The heat-treated product may be cooled down to room temperature to prepare a composite. The time required for the process of cooling from the heat treatment temperature T to room temperature may be, for example, about 1 hour to about 5 hours.

In the second condition, for example, hydrogen may be provided first to a reactor, in which the second metal oxide represented by $M_aO_c$ (where $0<a\leq3$ and $0<c\leq4$, and when a is 1, 2, or 3, c is an integer) is arranged, and the reaction temperature may be raised to the heat treatment temperature T. The time for raising the temperature to the heat treatment temperature T may be 10 minutes to about 4 hours, and the heat treatment temperature T may be in a range of about 700 °C to about 1,100 °C. After the heat-treatment is performed at the heat-treatment temperature T for a set or predetermined reaction time, methane gas may be supplied, and the heat-treatment may be performed for residual reaction time. The reaction time may be, for example, 4 hours to 8 hours. The heat-treated product may be cooled down to room temperature to prepare a composite. In the cooling process, nitrogen may be provided thereto. The time required for the process of cooling from the heat treatment temperature T to room temperature may be, for example, about 1 hour to about 5 hours.

In the third condition, for example, hydrogen may be provided first to a reactor, in which the second metal oxide represented by $M_aO_c$ (where $0<a\leq3$ and $0<c\leq4$, and when a is 1, 2, or 3, c is an integer) is arranged, and the reaction temperature may be raised to the heat treatment temperature T. The time for raising the temperature to the heat treatment temperature T may be 10 minutes to about 4 hours, and the heat treatment temperature T may be in a range of about 700 °C to about 1,100 °C. After the heat-treatment is performed at the heat-treatment temperature (T) for a set or predetermined reaction time, a mixed gas of methane and hydrogen is supplied, and heat-treatment is performed for residual reaction time. The reaction time may be, for example, 4 hours to 8 hours. The heat-treated product may be cooled down to room temperature to prepare a composite. In the cooling process, nitrogen may be provided thereto. The time required for the process of cooling from the heat treatment temperature T to room temperature may be, for example, about 1 hour to about 5 hours.

In the preparation of the composite, when the carbon source gas includes water vapor, the composite having excellent conductivity may be obtained. The content of water vapor in the mixed gas is not limited, and may be, for example, in a range of about 0.01 vol% to about 10 vol% based on 100 vol% of the total carbon source gas. The carbon source gas may be: for example, methane; a mixed gas including methane and an inert gas; or a mixed gas including methane and an oxygen-containing gas.

The carbon source gas may be: for example, methane; a mixed gas including methane and carbon dioxide; or a mixed gas including methane, carbon dioxide, and water vapor. The molar ratio of methane and carbon dioxide in the mixed gas of methane and carbon dioxide may be in a range of about 1:0.20 to about 1:0.50, about 1:0.25 to about 1:0.45, or about 1:0.30 to about 1:0.40. The molar ratio of methane and carbon dioxide and water vapor in the mixed gas of methane and carbon dioxide and water vapor may be in a range of about 1:0.20 to about 0.50:0.01 to 1.45, about 1:0.25 to about 0.45:0.10 to 1.35, or about 1:0.30 to about 0.40:0.50 to 1.0.

The carbon source gas may be, for example, carbon monoxide or carbon dioxide. The carbon source gas may be, for example, a mixed gas of methane and nitrogen. The molar ratio of methane and nitrogen in the mixed gas of methane and nitrogen may be in a range of about 1:0.20 to about 1:0.50, about 1:0.25 to about 1:0.45, or about 1:0.30 to about 1:0.40. The carbon source gas may not include an inert gas such as nitrogen.

The heat-treatment pressure may be selected in consideration of the heat-treatment temperature, the composition of the gas mixture, and the desired coating amount of carbon. The heat-treatment pressure may be controlled by adjusting the amount of the inflowing mixed gas and the amount of the outflowing gas mixture. The heat-treatment pressure may be, for example, greater than or equal to about 0.5 atm, greater than or equal to about 1 atm, greater than or equal to about 2 atm, greater than or equal to about 3 atm, greater than or equal to about 4 atm, or greater than or equal to about 5 atm. The heat-treatment pressure may be, for example, in a range of about 0.5 atm to about 10 atm, about 1 atm to about 10 atm, about 2 atm to about 10 atm, about 3 atm to about 10 atm, about 4 atm to about 10 atm, or about 5 atm to about 10 atm.

The heat-treatment time is not particularly limited, and may be selected in consideration of the heat-treatment temperature, the heat-treatment pressure, the composition of the gas mixture, and the desired coating amount of carbon. For example, the reaction time at the heat-treatment temperature may be, for example, about 10 minutes to about 100 hours, about 30 minutes to about 90 hours, or about 50 minutes to about 40 hours. For example, as the heat-treatment time increases, the amount of carbon (e.g., graphene) deposited increases, and thus, the electrical properties of the composite may be improved. However, this trend may not necessarily be directly proportional to time. For example, after a set or predetermined period of time, the deposition of carbon, e.g., graphene, may no longer occur, or the deposition rate of carbon, e.g., graphene, may be lowered.

Through a gas phase reaction of the carbon source gas described above, even at a relatively low temperature, a composite may be obtained by providing uniform coating of the first carbon-based material, e.g., coating of graphene, to at least one selected from the second metal oxide represented by $M_aO_c$ (where $0<a\leq3$, $0<c\leq4$, and when a is 1, 2, or 3, c is an integer) and a reduction product thereof that is the second metal oxide represented by $M_aO_b$ (where $0<a\leq3$, $0<b<4$, and when a is 1, 2, or 3, b is not an integer).

The composite may include: for example, a first carbon-based material matrix, for example, a graphene matrix, having at least one structure selected from a spherical structure, a spiral structure in which a plurality of spherical structures are connected, a cluster structure in which a plurality of spherical structures are aggregated, and a sponge structure; and at least one selected from the second metal oxide represented by $M_aO_c$ (wherein $0<a\leq3$, $0<c\leq4$, and when a is 1, 2, or 3, c is an integer) and a reduction product thereof that is the first metal oxide represented by $M_aO_b$ (wherein $0<a\leq3$, $0<b<4$, and when a is 1, 2, or 3, b is not an integer) in the carbon-based material matrix.

Next, the lithium transition metal oxide, the composite, and the second carbon-based material may be mechanically milled.

In the mechanically milling process, the milling method is not particularly limited, and any method capable of directly contacting the lithium transition metal oxide, the composite, and the second carbon-based material using a machine available in the art may be used.

For the milling, for example, a Nobilta mixer or the like may be used. The number of rotations of the mixer at the time of milling may be, for example, in a range of about 1,000 rpm to about 5,000 rpm or about 2,000 rpm to about 4,000 rpm. When the milling rate is too low, the shear force applied to the lithium transition metal oxide, the composite, and the second carbon-based material may be weak, and thus the lithium transition metal oxide and the composite may not form a chemical bond. When the milling rate is too high, the composite and the second carbon-based material may be uniformly coated on the lithium transition metal oxide by the complexation being performed in an excessively short time, and thus a uniform and continuous shell may not be formed. The milling time may be, for example, about 5 minutes to about 100 minutes, about 5 minutes to about 60 minutes, or about 5 minutes to about 30 minutes. When the milling time is too short, a uniform shell may not be formed because the composite and the second carbon-based material may be uniformly coated on the lithium transition metal oxide. When the milling time is excessively long, the production efficiency may decrease. The content of the composite may be less than or equal to about 5 wt%, less than or equal to about 4 wt%, less than or equal to about 3 wt%, less than or equal to about 2 wt%, or less than or equal to about 1 wt%, with respect to the total weight of the lithium transition metal oxide and the composite. The content of the composite may be, for example, in a range of about 0.01 wt% to about 5 wt%, about 0.01 wt% to about 4 wt%, about 0.01 wt% to about 3 wt%, about 0.1 wt% to about 2 wt%, or about 0.1 wt% to about 1 wt%, with respect to the total weight of the lithium transition metal oxide and the composite. For example, the content of the composite may be, based on 100 parts by weight of the lithium transition metal oxide and the composite, in a range of about 0.01 parts by weight to about 5 parts by weight, about 0.01 parts by weight to about 4 parts by weight, about 0.01 parts by weight to 3 parts by weight, about 0.1 parts by weight to about 3 parts by weight, about 0.1 parts by weight to about 2 parts by weight, or about 0.1 parts by weight to 1 part by weight. The average particle diameter (D50) of the composite used for the mechanical milling of the lithium transition metal oxide and the composite may be, for example, in a range of about 50 nm to about 200 nm, about 100 nm to about 300 nm, or about 200 nm to about 500 nm.

Hereinafter example embodiments will be described in detail with reference to Examples and Comparative Examples. These examples are provided for illustrative purposes only and are not intended to limit the scope of the present inventive concept.

Preparation of composite

Preparation Example 1: $Al_2O_3$@Gr composite

$Al_2O_3$ particles (average particle diameter: about 20 nanometers (nm)) were placed in a reactor, and then the temperature inside the reactor was raised to 1,000 °C under the condition that $CH_4$ was supplied into the reactor at about 300 standard cubic centimeters per minute (sccm) and about 1 atmosphere (atm) for about 30 minutes.

Subsequently, heat treatment was performed while maintaining the temperature at 1,000 °C for 7 hours. Then, the temperature inside the reactor was adjusted to room temperature (20 °C to 25 °C) to obtain a composite in which $Al_2O_3$ particles and $Al_2O_z$ (where 0<z<3) particles as a reduction product thereof were embedded in graphene.

Here, the amount of alumina included in the composite was 60 wt%.

Preparation Example 2: $Al_2O_3$@Gr composite

A composite was prepared in the same manner as in Preparation Example 1, except that $Al_2O_3$ particles (average particle diameter: about 200 nm) were used instead of the $Al_2O_3$ particles (average particle diameter: about 20 nm).

Comparative Preparation Example 1: $SiO_2$@Gr composite

$SiO_2$ particles (average particle diameter: about 15 nm) were placed in a reactor, and then the temperature inside the reactor was raised to 1,000 °C under the condition that $CH_4$ was supplied into the reactor at about 300 sccm and about 1 atm for about 30 minutes.

Subsequently, heat treatment was performed while maintaining the temperature at 1,000 °C for 7 hours. Then, the temperature inside the reactor was adjusted to room temperature (20 °C to 25 °C) to obtain a composite in which $SiO_2$ particles and $SiO_y$ (where 0<y<2) particles as a reduction product thereof were embedded in graphene.

Preparation of composite cathode active material

Example 1: NCA91 coated with 0.2 wt% of $Al_2O_3$@Gr composite (0.12 wt% of alumina) and 0.05 wt% of CNT

$LiNi_{0.91}Co_{0.05}Al_{0.04}O_2$ (hereinafter referred to as NCA91) having an average particle diameter of 10 μm, the composite prepared in Preparation Example 1, and carbon nanotube structure (hereinafter referred to as CNT) were milled at a rotation speed of about 1,000 revolutions per minutes (rpm) to about 2,000 rpm for about 5 minutes to about 30 minutes using a Nobilta mixer (Hosokawa, Japan) to obtain a composite cathode active material. The NCA91, the composite, and the CNT were mixed at a ratio of 99.75:0.2:0.05 to prepare a composite cathode active material.

As shown in FIG. 2, it was confirmed that the CNT was arranged on the surface of the composite cathode active material. The CNT included a primary CNT structure and a secondary CNT structure formed by agglomeration of multiple units of the CNT.

The primary CNT consists of one CNT unit. The CNT unit had a length in a range of about 200 nm to about 300 nm, and the CNT had a diameter of about 10 nm.

The secondary CNT consists of a plurality of the CNT units. The secondary CNT structure had a length of greater than or equal to about 500 nm and a diameter of greater than or equal to about 40 nm.

Example 2: NCA91 coated with 0.15 wt% of $Al_2O_3$@Gr composite and 0.05 wt% of CNT

A composite cathode active material was prepared in the same manner as in Example 1, except that the mixing ratio of the composite and the CNT was changed from 0.2:0.05 to 0.15:0.05.

Example 3: NCA91 coated with 0.18 wt% of $Al_2O_3$@Gr composite and 0.02 wt% of CNT

A composite cathode active material was prepared in the same manner as in Example 1, except that the mixing ratio of the composite and the CNT was changed from 0.2:0.05 to 0.18:0.02.

Example 4: NCA91 coated with 0.1 wt% of $Al_2O_3$@Gr composite and 0.1 wt% of CNT

A composite cathode active material was prepared in the same manner as in Example 1, except that the mixing ratio of the composite and the CNT was changed from 0.2:0.05 to 0.1:0.1.

Example 5: NCA91 (particle diameter of alumina: 200 nm) coated with 0.2 wt% of Al$_2$O$_3$@Gr composite and 0.05 wt% of CNT

A composite cathode active material was prepared in the same manner as in Example 1, except that the composite of Preparation Example 2 was used insted of the composite of Preparation Example 1.

Comparative Example 1: Bare NCA91

NCA91 having an average particle diameter of 10 $\mu$m was used as it is as a composite cathode active material.

Comparative Example 2: NCA91 coated with 0.25 wt% of CNT

A composite cathode active material was prepared in the same manner as in Example 1, except that the composite of Preparation Example 1 was not used and 0.25 wt% of the CNT was used.

Comparative Example 3: Silicon composite structure coated with 0.25 wt% of SiO$_2$@Gr composite

A composite cathode active material was prepared in the same manner as in Example 1, except that the composite obtained in Comparative Preparation Example 1 was used instead of the composite prepared in Preparation Example 1.

Comparative Example 4: Simple mixture of NCA91, 0.2 wt% of Al$_2$O$_3$@Gr composite and 0.05 wt% of CNT

A simple mixture of NCA91 having an average particle diameter of 10 $\mu$m, the composite of Preparation Example 1, and CNT mixed at a weight ratio of 97.5:0.2:0.05 was used as it ias as a composite cathode active material.

Manufacture of lithium battery (half cell)

Example 6

Manufacture of cathode

A mixture of the composite cathode active material of Example 1, a carbon conductor (e.g., Denka Black), and PVDF mixed at a weight ratio of 98.85:0.5:0.65 was mixed with N-methyl pyrrolidone (NMP) in an agate mortar to prepare a slurry.
The slurry was bar-coated on an aluminium current collector having a thickness of 15 $\mu$m, dried at room temperature, further dried in vacuum at 120 °C, and rolled and punched to prepare a cathode having a thickness of 60 $\mu$m.

Manufacture of coin cell

Each coin cell was manufactured using the prepared cathode. Here, lithium metal was used as a counter electrode, and a solution in which a PTFE separator and 1.5 M LiPF$_6$ was dissolved in ethylene carbonate (EC)+ethylmethyl carbonate (EMC)+dimethyl carbonate (DMC) (at a volume ratio of 2:1:7) was used as an electrolyte.

Examples 7 to 10

Each coin cell was manufactured in the same manner as in Example 6, except that the composite cathode active material of each of Examples 2 to 5 was used instead of the composite cathode active material of Example 1.

Comparative Examples 5 to 8

Each coin cell was manufactured in the same manner as in Example 6, except that the composite cathode active material of each of Comparative Examples 1 to 4 was used instead of the composite cathode active material of Example 1.

Manufacture and drying of lithium battery (half cell)

Example 11

(Manufacture of cathode)

The composite cathode active material of Example 1 as a dry cathode active material, a carbon conductor (e.g., Denka Black) as a dry conductor, and polytetrafluoroethylene (PTFE) as a dry binder were added at a weight ratio of 92:4:4 to a blade mixer. Then, a first dry-mixing process was performed at 25 °C and a speed of 1,000 rpm for 10 minutes to prepare a first mixture in which a dry cathode active material, a dry conductive material, and a dry binder were uniformly mixed.

Subsequently, to allow fiberization of the dry-type binder to proceed, a second drying process was additionally performed on the first mixture at 25 °C and a speed of 5,000 rpm for 20 minutes to prepare a second mixture. In the preparation of the first mixture and the second mixture, a separate solvent was not used.

The prepared second mixture was addded to an extruder to extrude a sheet-type self-standing film with the cathode active material layer. Here, the pressure at the time of extrusion was 50 MPa.

A carbon layer as an interlayer was arranged on one surface of an aluminium thin film having a thickness of 12 $\mu$m to prepare a first laminate on which the interlayer was arranged on one surface of a second cathode current collector.

The interlayer was prepared by coating an aluminium thin film with a composition including a carbon conductor (e.g., Denka black) and PVDF and drying the aluminium thin film. Here, the thickness of the interlayer arranged on one surface of the aluminium thin film was about 1 $\mu$m.

A self-standing film with the cathode active material layer was arranged on the interlayer of the prepared first laminate, and then rolled to prepare a cathode.

Manufacture of coin cell

Each coin cell was manufactured using the prepared cathode. Here, lithium metal was used as a counter electrode, and a solution in which a PTFE separator and 1.5 M $LiPF_6$ was dissolved in EC+EMC+DMC (at a volume ratio of 2:1:7) was used as an electrolyte.

Comparative Example 9

A coin cell was manufactured in the same manner as in Example 11, except that the composite cathode active material of Comparative Example 1 was used instead of the composite cathode active material of Example 1.

Evaluation Example 1: XPS spectrum evaluation

In the process of preparing the composite prepared in Preparation Example 1, XPS spectra were measured using Quantum 2000 (Physical Electronics) over time. Before heating, XPS spectra of C 1s orbitals and Al 2p orbitals of samples were measured after 1 minute, after 5 minutes, after 30 minutes, after 1 hour, and after 4 hours, respectively. At the initial heating, the peak for the Al 2p orbital appeared, and the peak for the C 1s orbital did not appear. After 30 minutes, the peak for the 1s orbital appeared clearly, and the size of the peak for the Al 2p orbital significantly reduced.

After 30 minutes, near 284.5 electronvolt (eV), peaks for C 1s orbitals appeared clearly due to C-C bonds and C=C bonds due to graphene growth.

As reaction time elapsed, the oxidation number of aluminium decreased, and thus the peak position of the Al 2p orbital was shifted toward a lower binding energy (eV).

Accordingly, it was confirmed that, as the reaction proceeded, graphene was grown on $Al_2O_3$ particles, and $Al_2O_x$ (where 0<x<3), which is a reduction product of $Al_2O_3$, was produced.

The average contents of carbon and aluminium were measured through XPS analysis results in 10 regions of the composite sample prepared in Preparation Example 1. With respect to the measurement results, a deviation of the aluminium content for each region was calculated. The deviation of the aluminium content was expressed as a percentage of the average value, and this percentage was referred to as uniformity. The percentage of the average value of the deviation of the aluminium content, that is, the uniformity of the aluminium content was 1 %. Therefore, it was confirmed that alumina was uniformly distributed in the composite prepared in Preparation Example 1.

Evaluation Example 2: SEM, HR-TEM, and SEM-EDS analysis

The composite prepared in Preparation Example 1, the composite cathode active material prepared in Example 1, and the composite cathode active material prepared in Comparative Example 1 were subjected to scanning electron microscope (SEM) analysis, high-resolution transmission electron microscope (HR-TEM) analysis, and energy-dispersive X-ray spectroscope (EDX) analysis.

For SEM-EDX analysis, FEI Titan 80-300 available from Philips Company was used.

The composite prepared in Preparation Example 1 showed a structure in which $Al_2O_3$ particles and $Al_2O_z$ (where 0<z<3) particles, which are reduction products thereof, were embedded in graphene. It was confirmed that the graphene layer was disposed on the outer surface of one or more particles selected from $Al_2O_3$ particles and $Al_2O_z$ (where 0<z<3). The one or more particles selected from $Al_2O_3$ particles and $Al_2O_z$ (where 0<z<3) were uniformly distributed in the graphene matrix. The one or more particles selected from $Al_2O_3$ particles and $Al_2O_z$ (where 0<z<3) particles had a particle diameter of about 20 nm. The composite prepared in Preparation Example 1 had a particle diameter in a range of about 50 nm to about 200 nm. It was confirmed that, in the composite cathode active material prepared in Example 1, a shell formed by a composite including graphene was arranged on the NCA core.

According to SEM-EDS mapping analysis of the composite cathode active materials prepared in Comparative Example 1 and Example 1, it was confirmed that the concentration of aluminium (Al) distributed on the surface of the composite cathode active material of Example 1 was increased compared to the surface of the cathode active material of Comparative Example 1.

It was also found that, in the cathode active material of Example 1, the composite prepared in Preparation Example 1 was uniformly coated on the NCA core to form a shell.

Evaluation Example 3: XPS spectrum evaluation (graphene-NCA chemical bond)

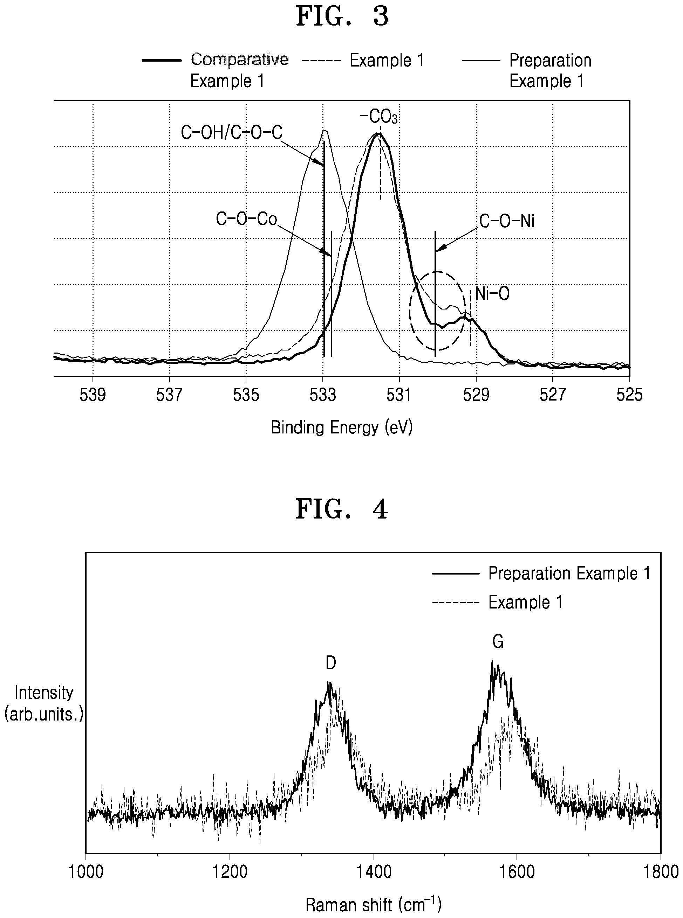

For the composite prepared in Preparation Example 1, the NCA of Comparative Example 1, and the composite cathode active material prepared in Example 1, XPS spectra of O 1s orbitals were measured using Quantum 2000 (Physical Electronics), and the results thereof are shown FIG. 3.

As shown in FIG. 3, for the composite cathode active material of Example 1, a peak due to a C-O-Ni bond was observed about 530.2 eV. This peak was determined to be a peak due to a bond formed between the NiO phase present on the NCM surface and the carbon of graphene. Therefore, it was confirmed that graphene contained in the shell formed on the core formed a covalent bond with Ni, which is a transition metal included in the core.

Evaluation Example 4: Raman spectrum evaluation (graphene-NCA chemical bond)

The Raman spectra for the composite prepared in Preparation Example 1 and the composite cathode active material prepared in Example 1 were measured, and the results thereof are shown in FIG. 4.

As shown in FIG. 4, the composite prepared in Preparation Example 1 showed a D band peak at 1338.7 cm$^{-1}$ and a G band peak at 1575.0 cm$^{-1}$ due to graphene.

In contrast, in the composite cathode active material of Example 1, the D band peak was shifted to 1351.3 cm$^{-1}$ by about about 12 cm$^{-1}$, and the G band peak was shifted to 1593.6 cm$^{-1}$ by about 18 cm$^{-1}$, due to the shell including graphene.

The shift of the D band peak was determined to be due to the strain of graphene, which is bound to the core by milling to form a shell.

The shift of the G band peak was determined to be due to the charge transfer between the core and the graphene in the composite formed by the C-O-Ni bond between the core and the graphene.

Therefore, it was confirmed that graphene included in the shell formed on the core formed a covalent bond with Ni, which is a transition metal included in the core.

Evaluation Example 5: Evaluation of charge and discharge characteristics at high temperature (45 °C)

Each of the lithium batteries prepared in Examples 6 to 10 and Comparative Examples 5 to 8 was charged with a constant current of 0.1 C rate at 25 °C until a voltage reached 4.3 voltage (V) (vs. Li), and was then cut-off at a current of 0.05 C rate while maintaining the voltage at 4.3 V in a constant voltage mode. Subsequently, each of the lithium batteries was discharged at a constant current of 0.1 C rate until the voltage reached 2.8 V (vs. Li) (formation cycle).

Each of the lithium batteries having undergone the formation cycle was charged with a constant current of 0.2 C rate at 45 °C until a voltage reached 4.3 V (vs. Li), and was then cut-off at a current of 0.05 C rate while maintaining the voltage at 4.3 V in a constant voltage mode. Subsequently, each of the lithium batteries was discharged at a constant current of 0.2 C rate until the voltage reached 2.8 V (vs. Li) (1st cycle). This cycle was repeated until the 50th cycle under

the same conditions.

In all charge/discharge cycles, a 10-minute stop time was provided after every one charge/discharge cycle. Some of the results of the charging and discharging experiments at room temperature are shown in Tables 1 and 2. Here, the initial efficiency is defined by Equation 1, and the capacity retention rate is defined by Equation 2:

Equation 1

Initial efficiency [%]=[discharge capacity in 1st cycle/charge capacity in 1st cycle]×100

Equation 2

Capacity retention (%)=(discharge capacity in 50th cycle/discharge capacity in 1st cycle)×100 %

Evaluation Example 6: Evaluation of direct current internal resistance (DR-IR) before/after charging and discharging at high temperature

With respect to the lithium batteries prepared in Examples 6 to 10 and Comparative Examples 5 to 8, before the evaluation of charging and discharging at high temperature and after the evaluation of charging and discharging at high temperature, DC-IR was measured by the following method, respectively:

after charging to a voltage of 50% of the state of charge with a current density of 0.5 C in the 1st cycle, a 10-minute resting time was provided after cut-off at 0.02 C;
after discharging at a constant current of 0.5 C for 30 seconds, a 10-minute resting time was provided after charging with a constant current of 0.5 C for 30 seconds;
after discharging at a constant current of 1.0 C for 30 seconds, a 10-minute resting time was provided after charging with a constant current of 0.5 C for 1 minute;
after discharging at a constant current of 2.0 C for 30 seconds, a 10-minute resting time was provided after charging with a constant current of 0.5 C for 2 minutes; and
after discharging at a constant current of 3.0 C for 30 seconds, a 10-minute resting time was provided after charging with a constant current of 0.5 C for 3 minutes.

From a ratio of average voltage change ($\Delta V$) and average current change ($\Delta I$) during discharging at a constant current at each C-rate, DC-IR (where R=$\Delta V/\Delta I$) was calculated, and an average value thereof was used as a measured value.

Some of the measured DC-IR before the evaluation of charging and discharging at high temperature and the DC-IR measurement results after the evaluation of charging and discharging at room temperature are shown in Table 2.

Table 1

| | Capacity retention (%) |
|---|---|
| Example 6: Coating with 0.2 wt% of $Al_2O_3$@Gr composite+0.05 wt% of CNT | 96.0 |
| Example 7: Coating with 0.15 wt% of $Al_2O_3$@Gr composite+0.05 wt% of CNT | 93.9 |
| Example 8: Coating with 0.18 wt% of $Al_2O_3$@Gr composite+0.02 wt% of CNT | 94.5 |
| Example 9: Coating with 0.1 wt% of $Al_2O_3$@Gr composite+0.1 wt% of CNT | 93.0 |
| Example 10: Coating with 0.2 wt% of $Al_2O_3$@Gr composite+0.05 wt% of CNT, 200 nm of $Al_2O_3$ | 91.5 |
| Comparative Example 5: No coating | 85.0 |
| Comparative Example 6: NCA91 coated with 0.25 wt% of CNT | 86.0 |

(continued)

| | Capacity retention (%) |
|---|---|
| Comparative Example 7: Silicon composite structure coated with 0.25 wt% of $SiO_2$@Gr composite | 90.2 |
| Comparative Example 8: Simple mixture of NCA91, 0.2 wt% of $Al_2O_3$@Gr composite and 0.05 wt% of CNT | 86.1 |

As shown in Table 1, the lithium batteries of Examples 6 to 10 had improved high-temperature lifespan characteristics compared to the lithium batteries of Comparative Examples 5 to 8.

The lithium battery of Comparative Example 6 had poor high-temperature lifespan characteristics compared to the lithium battery of Example 6. That is because, in the lithium battery of Comparative Example 6, a side effect between the NCA91 core and the electrolyte could no be effectively blocked since only CNT was arranged on the NCA91 core.

The lithium battery of Comparative Example 7 had poor high-temperature lifespan characteristics compared to the lithium battery of Example 6. That is because, in the lithium battery of Comparative Example 7, the high-voltage stability of the $SiO_2$@Gr composite arranged on the NCA91 core was poor.

The lithium battery of Comparative Example 8 had poor high-temperature lifespan characteristics compared to the lithium battery of Example 6. That is because, in the lithium battery of Comparative Example 8, a side effect between the NCA91 core and the electrolyte could no be effectively blocked since the NCA91, the composite, and the CNT were simply mixed and a shell could not be formed on the NCA91 core.

Although not shown in Table 1, the lithium battery of Example 11 had improved lifespan characteristics compared to the lithium battery of Comparative Example 8.

Table 2

| | Initial efficiency (%) | Initial DC-IR [ohm] | DC-IR after 50 cycles [ohm] |
|---|---|---|---|
| Example 6: Coating with 0.2 wt% of $Al_2O_3$@Gr composite+0.05 wt% of CNT | 87.7 | 4.5 | 7.2 |
| Example 7: Coating with 0.15 wt% of $Al_2O_3$@Gr composite+0.05 wt% of CNT | 87.7 | 4.5 | 8.2 |
| Comparative Example 5: No coating | 87.1 | 4.9 | 12.1 |

As shown in Tables 1 and 2, the lithium batteries of Examples 6 and 7 had improved initial efficiency and high-temperature lifespan characteristics, and suppressed an increase in DC-IR, compared to the lithium battery of Comparative Example 5.

Although not shown in Table 2, the lithium batteries of Examples 8 to 10 had improved initial efficiency and suppressed an increase in DC-IR, compared to the lithium battery of Comparative Example 5.

Evaluation Example 7: Evaluation of room temperature high rate characteristics and reversibility of electrode reaction

Each of the lithium batteries prepared in Examples 6 to 10 and Comparative Examples 5 to 8 was charged with a constant current of 0.1 C rate at 25 °C until a voltage reached 4.3 voltage (V) (vs. Li), and was then cut-off at a current of 0.05 C rate while maintaining the voltage at 4.3 V in a constant voltage mode. Subsequently, each of the lithium batteries was discharged at a constant current of 0.1 C rate until the voltage reached 2.8 V (vs. Li) (formation cycle).

Each of the lithium batteries having undergone the formation cycle was charged with a constant current of 0.2 C rate at 25 °C until a voltage reached 4.3 V (vs. Li), and was then cut-off at a current of 0.05 C rate while maintaining the voltage at 4.3 V in a constant voltage mode. Subsequently, each of the lithium batteries was discahrged at a constant current of 0.2 C rate until the voltage reached 2.8 V (vs. Li) (1st cycle).

Each of the lithium batteries having undergone the 1st cycle was charged with a constant current of 0.2 C rate at 25 °C until a voltage reached 4.3 V (vs. Li), and was then cut-off at a current of 0.05 C rate while maintaining the voltage at 4.3 V in a constant voltage mode. Subsequently, each of the lithium batteries was discahrged at a constant current of 0.5 C rate until the voltage reached 2.8 V (vs. Li) (2nd cycle).

Each of the lithium batteries having undergone the 2nd cycle was charged with a constant current of 0.2 C rate at 25 °C until a voltage reached 4.3 V (vs. Li), and was then cut-off at a current of 0.05 C rate while maintaining the voltage at 4.3 V in a constant voltage mode. Subsequently, each of the lithium batteries was discahrged at a constant current of 1.0 C rate until the voltage reached 2.8 V (vs. Li) (3rd cycle).

In all charge/discharge cycles, a 10-minute stop time was provided after every one charge/discharge cycle. Some of the results of the room-temperature charge/discharge test are shown in Table 3. The high rate characteristics were defined by Equation 3.

The reversibility of the electrode reaction was represented by Equation 4. The reversibility of the electrode reaction is a ratio of capacity charged in a constant current mode to the total charge capacity:

Equation 3

High rate characteristics [%]=[discharge capacity at 1.0 C rate (3rd cycle discharge capacity)/discharge capacity at 0.2 C rate (1st cycle discharge capacity)] × 100

Equation 4

[00308] Reversibility of electrode reaction [%]=[charge capacity in constant current mode at 0.2 C rate (1st cycle CC charge capacity)/charge capacity in constant current mode at 0.2 C rate and constant voltage mode (1st cycle CC+CV charge capacity)]×100

Table 3

| | High-rate characteristics (%) | Reversibility of electrode reaction [%] |
|---|---|---|
| Example 6: Coating with 0.2 wt% of $Al_2O_3$@Gr composite+0.05 wt% of CNT | 95.6 | 89.4 |
| Example 7: Coating with 0.15 wt% of $Al_2O_3$@Gr composite+0.05 wt% of CNT | 94.9 | 87.6 |
| Example 8: Coating with 0.18 wt% of $Al_2O_3$@Gr composite+0.02 wt% of CNT | 94.2 | 88.5 |
| Example 9: Coating with 0.1 wt% of $Al_2O_3$@Gr composite+0.1 wt% of CNT | 93.9 | 85.7 |
| Example 10: Coating with 0.2 wt% of $Al_2O_3$@Gr composite+0.05 wt% of CNT, 200 nm of $Al_2O_3$ | 93.4 | 81.6 |
| Comparative Example 5: No coating | 92.7 | 73.9 |

As shown in Table 3, the lithium batteries of Examples 6 to 10 had improved high-rate characteristics and improved reversibility of the electrode reaction, compared to the lithium battery of Comparative Example 5.

According to the one or more embodiments, a composite cathode active material includes a shell including a first metal oxide, a first carbon-based material, and a second carbon-based material, and thus a lithium battery may have improved high-temperature cycle characteristics, suppress an increase in internal resistance, and improve high-rate characteristics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

**Claims**

1. A composite cathode active material comprising:

   a core comprising a lithium transition metal oxide; and
   a shell arranged on and conformed to a surface of the core,
   the shell comprises: at least one first metal oxide represented by Formula $M_aO_b$ (where $0<a\leq3$, $0<b<4$, and when a is 1, 2, or 3, and b is not an integer); a first carbon-based material; and a second carbon-based material, the at least one first metal oxide is arranged in a matrix of the first carbon-based material, and M is at least one metal selected from Groups 2 to 13, 15, and 16 of the Periodic Table of Elements, and
   the second carbon-based material comprises fibrous carbon having an aspect ratio of greater than or equal to 10.

2. The composite cathode active material of claim 1, wherein the second carbon-based material comprises a nanofiber, a carbon nanofiber, or a combination thereof.

3. The composite cathode active material of claim 2, wherein:

   (i) the carbon nanotube comprises a primary carbon nanotube structure, a secondary carbon nanotube structure formed by agglomeration of multiples particles of the primary carbon nanotube structures, and
   the primary carbon nanotube structure is one unit of the carbon nanotube; and/or
   (ii) the primary carbon nanotube structure comprises a single-walled carbon nanotube (SWCNT), a double-walled carbon nanotube (DWCNT), a multi-walled carbon nanotube (MWCNT), or a combination thereof.

4. The composite cathode active material of claim 2 or claim 3, wherein:

   (i) the primary carbon nanotube structure has a diameter in a range of about 1 nm to about 20 nm and a length in a range of about 100 nm to about 2 $\mu$m; and/or
   (ii) the secondary carbon nanotube structure is a bundle-type carbon nanotube, a rope-type carbon nanotube, or a combination thereof; and/or
   (iii) the secondary carbon nanotube structure has a diameter in a range of about 2 nm to about 50 nm and a length in a range of about 500 nm to about 1,000 $\mu$m.

5. The composite cathode active material of any one of claims 1 to 4, wherein an amount of the second carbon-based material is in a range of about 0.1 wt% to about 50 wt% based on the total weight of the first carbon-based material and the second carbon-based material,

   the amount of the second carbon-based material is in a range of about 0.001 wt% to about 1 wt% based on the total weight of the composite cathode active material, and
   the second carbon-based material is disposed on a surface of the composite cathode active material.

6. The composite cathode active material of any one of claims 1 to 5, wherein a first metal comprised in the first metal oxide comprises at least one selected from Al, Nb, Mg, Sc, Ti, Zr, V, W, Mn, Fe, Co, Pd, Cu, Ag, Zn, Sb, and Se, and the first metal oxide is at least one selected from $Al_2O_z$ (where $0<z<3$), $NbO_x$ (where $0<x<2.5$), $MgO_x$ (where $0<x<1$), $Sc_2O_z$ (where $0<z<3$), $TiO_y$ (where $0<y<2$), $ZrO_y$ (where $0<y<2$), $V_2O_z$ (where $0<z<3$), $WO_y$ (where $0<y<2$), $MnO_y$ (where $0<y<2$), $Fe_2O_z$ (where $0<z<3$), $Co_3O_w$ (where $0<w<4$), $PdO_x$ (where $0<x<1$), $CuO_x$ (where $0<x<1$), $AgO_x$ (where $0<x<1$), $ZnO_x$ (where $0<x<1$), $Sb_2O_z$ (where $0<z<3$), and $SeO_y$ (where $0<y<2$).

7. The composite cathode active material of any one of claims 1 to 6, wherein the shell further comprises a second metal oxide represented by Formula $M_aO_c$ (where $0<a\leq3$, $0<c\leq4$, and when a is 1, 2, or 3, c is an integer),

   the second metal oxide comprises a metal identical to the first metal oxide, and
   a ratio of a to c, c/a, in the second metal oxide is greater than a ratio of a to b, b/a, in the first metal oxide.

8. The composite cathode active material of claim 7, wherein the second metal oxide is selected from $Al_2O_3$, $NbO$, $NbO_2$, $Nb_2O_5$, $MgO$, $Sc_2O_3$, $TiO_2$, $ZrO_2$, $V_2O_3$, $WO_2$, $MnO_2$, $Fe_2O_3$, $Co_3O_4$, $PdO$, $CuO$, $AgO$, $ZnO$, $Sb_2O_3$, and $SeO_2$, and the first metal oxide is a reduction product of the second metal oxide, optionally wherein a diameter of at least one of the first metal oxide and the second metal oxide is in a range of about 1 nm to about 100 nm.

9. The composite cathode active material of any one of claims 1 to 8, wherein the shell comprises the first carbon-based material disposed in a direction protruding from the surface of at least one of the first metal oxide and the second metal oxide, and
the shell has a thickness in a range of about 1 nm to about 5 $\mu$m.

10. The composite cathode active material of any one of claims 1 to 9, wherein the shell comprises at least one selected from a composite, which comprises the first metal oxide and the first carbon-based material, and the second carbon-based material, and a milling product of the composite, and

an amount of at least one of the composite and the milling product of the composite is in a range of about 0.01 wt% to about 5 wt% based on the total weight of the composite cathode active material, optionally wherein the first carbon-based material has a branched structure, and the metal oxide is distributed in the branched structure, and
the branched structure comprises a plurality of first carbon-based materials that are in contact with one another.

11. The composite cathode active material of any one of claims 1 to 10, wherein the lithium transition metal oxide is represented by one of Formulae 1 to 8:

Formula 1 $\quad\quad Li_aNi_xCo_yM_zO_{2-b}A_b$

wherein, in Formula 1,

$1.0 \leq a \leq 1.2$, $0 \leq b \leq 0.2$, $0.8 \leq x < 1$, $0 \leq y \leq 0.2$, $0 < z \leq 0.2$, and $x+y+z=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

Formula 2 $\quad\quad LiNi_xCo_yMn_zO_2$

Formula 3 $\quad\quad LiNi_xCo_yAl_zO_2$

wherein, in Formulae 2 and 3, $0.8 \leq x \leq 0.95$, $0 \leq y \leq 0.2$, $0 < z \leq 0.2$, and $x+y+z=1$,

Formula 4 $\quad\quad LiNi_xCo_yMn_zAl_wO_2$

wherein, in Formula, $0.8 \leq x \leq 0.95$, $0 \leq y \leq 0.2$, $0 < z \leq 0.2$, $0 < w \leq 0.2$, and $x+y+z+w=1$,

Formula 5 $\quad\quad Li_aCo_xM_yO_{2-b}A_b$

wherein, in Formula 5,
$1.0 \leq a \leq 1.2$, $0 \leq b \leq 0.2$, $0.9 \leq x \leq 1$, $0 \leq y \leq 0.1$, and $x+y=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

Formula 6 $\quad\quad Li_aNi_xMn_yM'_zO_{2-b}A_b$

wherein, in Formula 6,
$1.0 \leq a \leq 1.2$, $0 \leq b \leq 0.2$, $0 < x \leq 0.3$, $0.5 \leq y < 1$, $0 < z \leq 0.3$, and $x+y+z=1$,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

Formula 7 $\quad\quad Li_aM1_xM2_yPO_{4-b}X_b$

wherein, in Formula 7, $0.90 \leq a \leq 1.1$, $0 \leq x \leq 0.9$, $0 \leq y \leq 0.5$, $0.9 < x+y < 1.1$, and $0 \leq b \leq 2$,

M1 is chromium (Cr), manganese (Mn), iron (Fe), cobalt (Co), nickel (Ni), copper (Cu), zirconium (Zr), or a combination thereof, and

M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X is O, F, S, P, or a combination thereof

$$\text{Formula 8} \qquad Li_aM3_zPO_4$$

wherein, in Formula 8, $0.90 \leq a \leq 1.1$ and $0.9 \leq z \leq 1.1$,

M3 is chromium (Cr), manganese (Mn), iron (Fe), cobalt (Co), nickel (Ni), copper (Cu), zirconium (Zr), or a combination thereof.

12. A cathode comprising the composite cathode active material of any one of claims 1 to 11.

13. A cathode comprising a dry composite cathode active material, a dry conductive material, and a dry binder, wherein the dry composite cathode active material comprises:

a core comprising a lithium transition metal oxide; and
a shell arranged on and conformed to a surface of the core,
the shell comprises: at least one first metal oxide represented by Formula $M_aO_b$ (where $0<a\leq3$, $0<b<4$, and when a is 1, 2, or 3, and b is not an integer); a first carbon-based material; and a second carbon-based material, the at least one first metal oxide is arranged in a matrix of the first carbon-based material, and M is at least one metal selected from Groups 2 to 13, 15, and 16 of the Periodic Table of Elements, and
the second carbon-based material comprises fibrous carbon having an aspect ratio of greater than or equal to 10.

14. A lithium battery comprising:

the cathode of claim 12 or claim 13;
an anode; and
an electrolyte between the cathode and the anode.

15. A method of preparing a composite positive electrode active material, the method comprising:

providing a lithium transition metal oxide;
providing a composite;
providing a second carbon-based material; and
mechanically milling the lithium transition metal oxide, the composite, and the second carbon-based material, the composite comprises: at least one first metal oxide represented by Formula $M_aO_b$ (where $0<a\leq3$, $0<b<4$, and when a is 1, 2, or 3, and b is not an integer); and the first carbon-based material, the at least one first metal oxide is arranged in a matrix of the first carbon-based material, and M is at least one metal selected from Groups 2 to 13, 15, and 16 of the Periodic Table of Elements, and
the second carbon-based material comprises fibrous carbon having an aspect ratio of greater than or equal to 10.

# FIG. 1

# FIG. 2

SDI 5.0kV 8.2mm x100k SE(U)　　　　　　　　500nm

# FIG. 3

Binding Energy (eV)

# FIG. 4

Raman shift (cm⁻¹)

# FIG. 5

# FIG. 6

# FIG. 7

Europäisches
Patentamt

European
Patent Office

Office européen
des brevets

**EUROPEAN SEARCH REPORT**

Application Number

EP 22 20 9747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/037680 A1 (PARK JUN-HO [KR] ET AL) 5 February 2015 (2015-02-05) * [0003], fig. 1 with [0103] * ----- | 1-15 | INV. H01M4/04 H01M4/1393 H01M4/1395 |
| T | HOU P X ET AL: "Purification of carbon nanotubes", CARBON, ELSEVIER OXFORD, GB, vol. 46, no. 15, 1 December 2008 (2008-12-01), pages 2003-2025, XP025589762, ISSN: 0008-6223, DOI: 10.1016/J.CARBON.2008.09.009 [retrieved on 2008-09-09] * page 2004 - page 2005 * ----- | 1 | H01M4/36 H01M4/38 H01M4/48 H01M4/587 H01M4/62 |
| X | US 2015/349333 A1 (PARK JUNHO [KR] ET AL) 3 December 2015 (2015-12-03) * paragraph [0135] * ----- | 1-15 | |
| T | Anonymous: "Transition metal - Wikipedia", , 1 January 2000 (2000-01-01), XP093032392, Retrieved from the Internet: URL:https://en.wikipedia.org/wiki/Transition_metal [retrieved on 2023-03-16] * the whole document * ----- -/-- | 1 | **TECHNICAL FIELDS SEARCHED (IPC)** H01M |

The present search report has been drawn up for all claims

| Place of search | Date of completion of the search | Examiner |
|---|---|---|
| Munich | 21 March 2023 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 20 9747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | SEAH M. P. ET AL: "Critical review of the current status of thickness measurements for ultrathin SiO2 on Si Part V: Results of a CCQM pilot study", SURFACE AND INTERFACE ANALYSIS., vol. 36, no. 9, 1 September 2004 (2004-09-01), pages 1269-1303, XP093032502, GB ISSN: 0142-2421, DOI: 10.1002/sia.1909 * page 1270; figure 1 * | | |

-----

TECHNICAL FIELDS
SEARCHED (IPC)

The present search report has been drawn up for all claims

| Place of search | Date of completion of the search | Examiner |
|---|---|---|
| Munich | 21 March 2023 | Radeck, Stephanie |

EPO FORM 1503 03.82 (P04C01)

EP 4 187 635 A1

## ANNEX TO THE EUROPEAN SEARCH REPORT
## ON EUROPEAN PATENT APPLICATION NO.

EP 22 20 9747

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2023

| Patent document cited in search report | | Publication date | Patent family member(s) | | Publication date |
|---|---|---|---|---|---|
| US 2015037680 | A1 | 05-02-2015 | KR 20150017012 | A | 16-02-2015 |
| | | | US 2015037680 | A1 | 05-02-2015 |
| US 2015349333 | A1 | 03-12-2015 | KR 20150137888 | A | 09-12-2015 |
| | | | US 2015349333 | A1 | 03-12-2015 |

EPO FORM P0459

For more details about this annex : see Official Journal of the European Patent Office, No. 12/82